# EUROPEAN PATENT APPLICATION

(11) **EP 4 120 607 A1**
(43) Date of publication of application: **18.01.2023**
(21) Application number: 21785163.3
(22) Date of filing: 09.04.2021
(51) Int. Cl.: H04L 1/18, H04L 5/00, H04W 72/04

(54) **METHOD AND DEVICE FOR TRANSMITTING FEEDBACK INFORMATION**

(30) Priority: 10.04.2020 CN 202010281670
(71) Applicant: Huawei Technologies Co., Ltd., Shenzhen, Guangdong 518129, (CN)
(72) Inventor: MA, Ruixiang, Shenzhen, Guangdong 518129 (CN); GUAN, Lei, Shenzhen, Guangdong 518129 (CN)
(74) Representative: Gill Jennings & Every LLP
(86) International application number: PCT/CN2021/086288
(87) International publication number: WO 2021/204275

(57) **Abstract**

A feedback information sending method and an apparatus are provided. The method includes: A network device sends, to a terminal device, M pieces of DCI for scheduling N transmissions of first data; and receives, in a first HARQ-ACK codebook, feedback information that is of the first data and that is sent by the terminal device. The M pieces of DCI correspond to L HARQ-ACK codebooks, and the first HARQ-ACK codebook is one of the L HARQ-ACK codebooks. The terminal device selects one HARQ-ACK codebook from the L HARQ-ACK codebooks to send the feedback information of the first data rather than send the feedback information of the first data in each HARQ-ACK codebook. In this way, uplink resource overheads are effectively reduced.

## Description

### CROSS-REFERENCE TO RELATED APPLICATIONS

This application claims priority to Chinese Patent Application No. 202010281670.0, filed with the China National Intellectual Property Administration on April 10, 2020 and entitled "FEEDBACK INFORMATION SENDING METHOD AND APPARATUS", which is incorporated herein by reference in its entirety.

### TECHNICAL FIELD

This application relates to the field of wireless communication technologies, and in particular, to a feedback information sending method and an apparatus.

### BACKGROUND

Ultra-reliable low-latency communication (ultra-reliable low-latency communication, URLLC) is one of three typical services in a 5th generation (5th generation, 5G) mobile communication system, and main application scenarios of the URLLC include: self driving, telemedicine, and the like. These application scenarios pose stricter requirements on reliability and a latency. Specific requirements of the URLLC service include: Data transmission reliability reaches 99.999%, a transmission latency is less than 1 ms, and signaling overheads are reduced as much as possible when requirements for high reliability and a low latency are satisfied.

In a conventional technology, one measure for ensuring the reliability of the URLLC service is to repeat a plurality of physical downlink control channels (physical downlink control channels, PDCCHs), to improve PDCCH reliability. The plurality of repeated PDCCHs carry same downlink control information (downlink control information, DCI), and are for scheduling a same physical downlink shared channel or a plurality of repeated physical downlink shared channels (physical downlink shared channels, PDSCHs). A terminal device needs to send only one piece of feedback information for a single PDSCH or a plurality of repeated PDSCHs that are scheduled by one PDCCH. However, there is currently no related solution for resolving how the terminal device sends feedback information when a plurality of PDCCHs are repeated.

### SUMMARY

Embodiments of this application provide a feedback information sending method and an apparatus, to improve reliability of feedback information, and avoid a problem that a network device and a terminal device have inconsistent understandings of the feedback information.

According to a first aspect, an embodiment of this application provides a feedback information sending method. The method may be performed by a network device, or may be performed by a component (for example, a chip or a circuit) configured in the network device. The method may include: The network device sends M pieces of DCI to a terminal device, where the M pieces of DCI are for scheduling N transmissions of first data, the M pieces of DCI correspond to L HARQ-ACK codebooks, where M and L are integers greater than or equal to 2, and N is a positive integer. The network device receives feedback information of the first data from the terminal device, where the feedback information is included in a first HARQ-ACK codebook, and the first HARQ-ACK codebook is one of the L HARQ-ACK codebooks.

In this embodiment of this application, although the M pieces of DCI may correspond to the L HARQ-ACK codebooks, the terminal device sends the feedback information of the first data in only one of the L HARQ-ACK codebooks rather than in each HARQ-ACK codebook. Therefore, uplink resource overheads are effectively reduced.

In a possible design of the first aspect, that the M pieces of DCI correspond to L HARQ-ACK codebooks includes: The M pieces of DCI are carried in L CORESET groups, and each CORESET group corresponds to one HARQ-ACK codebook. The first HARQ-ACK codebook is a HARQ-ACK codebook corresponding to a first CORESET group, and the first CORESET group is one of the L CORESET groups.

In a possible design of the first aspect, the first CORESET group is a CORESET group that is of the L CORESET groups and that has a smallest group identifier or that is at an earliest time domain location.

In a possible design of the first aspect, the first CORESET group is a CORESET group to which a first CORESET belongs. When TCIs used in the N transmissions of the first data are the same, a TCI of the first CORESET is the same as the TCIs used in the N transmissions of the first data. When TCIs used in at least two of the N transmissions of the first data are different, a TCI of the first CORESET is the same as a TCI used in the first transmission or the last transmission of the first data.

In a possible design of the first aspect, the first HARQ-ACK codebook is a HARQ-ACK codebook corresponding to first DCI. The first DCI is DCI that is of the M pieces of DCI and that is at an earliest time domain location. Alternatively, a time unit that is indicated by the first DCI and that is for sending the feedback information of the first data is an earliest time unit of time units that are indicated by the M pieces of DCI and that are for sending the feedback information of the first data. Alternatively, a time-frequency resource that is indicated by the first DCI and that is for sending the feedback information of the first data is a largest time-frequency resource of time-frequency resources that are indicated by the M pieces of DCI and that are for sending the feedback information of the first data. Alternatively, a time-frequency resource that is indicated by the first DCI and that is for sending the feedback information of the first data is a smallest time-frequency resource of time-frequency resources that are indicated by the M pieces of DCI and that are for sending the feedback information of the first data. Alternatively, the first DCI is carried in a first CORESET, and the first CORESET is a CORESET that is of CORESETs that carry the M pieces of DCI and that has a smallest CORESET identifier.

In a possible design of the first aspect, a HARQ-ACK codebook other than the first HARQ-ACK codebook in the L HARQ-ACK codebooks does not include the feedback information of the first data.

According to a second aspect, an embodiment of this application provides a feedback information sending method. The method may be performed by a terminal device, or may be performed by a component (for example, a chip or a circuit) configured in the terminal device. The method may include: The terminal device receives M pieces of DCI from a network device, where each of the M pieces of DCI is for scheduling N transmissions of first data, the M pieces of DCI correspond to L HARQ-ACK codebooks, where M and L are integers greater than or equal to 2, and N is a positive integer. The terminal device sends feedback information of the first data to the network device, where the feedback information is included in a first HARQ-ACK codebook, and the first HARQ-ACK codebook is one of the L HARQ-ACK codebooks.

In a possible design of the second aspect, that the M pieces of DCI correspond to L HARQ-ACK codebooks includes: The M pieces of DCI are carried in L CORESET groups, and each CORESET group corresponds to one HARQ-ACK codebook. The first HARQ-ACK codebook is a HARQ-ACK codebook corresponding to a first CORESET group, and the first CORESET group is one of the L CORESET groups.

In a possible design of the second aspect, the first CORESET group is a CORESET group that is of the L CORESET groups and that has a smallest group identifier or that is at an earliest time domain location.

In a possible design of the second aspect, the first CORESET group is a CORESET group to which a first CORESET belongs. When TCIs used in the N transmissions of the first data are the same, a TCI of the first CORESET is the same as the TCIs used in the N transmissions of the first data. When TCIs used in at least two of the N transmissions of the first data are different, a TCI of the first CORESET is the same as a TCI used in the first transmission or the last transmission of the first data.

In a possible design of the second aspect, the first HARQ-ACK codebook is a HARQ-ACK codebook corresponding to first DCI. The first DCI is DCI that is of the M pieces of DCI and that is at an earliest time domain location. Alternatively, a time unit that is indicated by the first DCI and that is for sending the feedback information of the first data is an earliest time unit of time units that are indicated by the M pieces of DCI and that are for sending the feedback information of the first data. Alternatively, a time-frequency resource that is indicated by the first DCI and that is for sending the feedback information of the first data is a largest time-frequency resource of time-frequency resources that are indicated by the M pieces of DCI and that are for sending the feedback information of the first data. Alternatively, a time-frequency resource that is indicated by the first DCI and that is for sending the feedback information of the first data is a smallest time-frequency resource of time-frequency resources that are indicated by the M pieces of DCI and that are for sending the feedback information of the first data. Alternatively, the first DCI is carried in a first CORESET, and the first CORESET is a CORESET that is of CORESETs that carry the M pieces of DCI and that has a smallest CORESET identifier.

In a possible design of the second aspect, a HARQ-ACK codebook other than the first HARQ-ACK codebook in the L HARQ-ACK codebooks does not include the feedback information of the first data.

According to a third aspect, an embodiment of this application provides a feedback information sending method. The method may be performed by a network device, or may be performed by a component (for example, a chip or a circuit) configured in the network device. The method may include: The network device sends M pieces of DCI to a terminal device, where each of the M pieces of DCI is for scheduling N transmissions of first data, values in DAI fields included in all of the M pieces of DCI are the same, where M is an integer greater than or equal to 2, and N is a positive integer. The network device receives feedback information of the first data from the terminal device, where the feedback information is included in a HARQ-ACK codebook, and a location of the feedback information in the HARQ-ACK codebook is determined based on first DCI of the M pieces of DCI.

In this embodiment of this application, the values in the DAI fields in the M pieces of DCI that are sent by the network device are the same. Therefore, the terminal device may generate one HARQ-ACK codebook based on the M pieces of DCI. The HARQ-ACK codebook includes the feedback information of the first data from the terminal device. In addition, a first location of the feedback information in the HARQ-ACK codebook may be determined based on the first DCI of the M pieces of DCI, to be specific, may be determined based on a DAI field in the first DCI. In this way, uplink resource overheads are effectively reduced.

In a possible design of the third aspect, the DAI field includes a first DAI and a second DAI. That values in DAI fields included in all of the M pieces of DCI are the same includes: Values of the first DAIs included in all of the M pieces of DCI are the same, and values of the second DAIs included in all of the M pieces of DCI are the same. The value of the first DAI is for indicating an accumulative count value of a quantity of times for which the terminal device is scheduled up to a PDCCH monitoring occasion and a cell for transmission of the first DCI, and the value of the second DAI is for indicating a total quantity of times for which the terminal device is scheduled up to the PDCCH monitoring occasion for transmission of the first DCI.

In a possible design of the third aspect, the DAI field includes a first DAI. That values in DAI fields included in all of the M pieces of DCI are the same includes: Values of the first DAIs included in all of the M pieces of DCI are the same. The value of the first DAI is for indicating an accumulative count value of a quantity of times for which the terminal device is scheduled up to a PDCCH monitoring occasion and a cell for transmission of the first DCI.

In a possible design of the third aspect, the first DCI is DCI that is of the M pieces of DCI and that is at an earliest time domain location. Alternatively, a time unit that is indicated by the first DCI and that is for sending the feedback information of the first data is an earliest time unit of time units that are indicated by the M pieces of DCI and that are for sending the feedback information of the first data. Alternatively, a time-frequency resource that is indicated by the first DCI and that is for sending the feedback information of the first data is a largest time-frequency resource of time-frequency resources that are indicated by the M pieces of DCI and that are for sending the feedback information of the first data. Alternatively, a time-frequency resource that is indicated by the first DCI and that is for sending the feedback information of the first data is a smallest time-frequency resource of time-frequency resources that are indicated by the M pieces of DCI and that are for sending the feedback information of the first data. Alternatively, the first DCI is carried in a first CORESET, and the first CORESET is a CORESET that is of CORESETs that carry the M pieces of DCI and that has a smallest CORESET identifier.

In a possible design of the third aspect, a CORESET group to which the CORESET carrying the first DCI belongs is a CORESET group that is of the CORESET groups carrying the M pieces of DCI and that has a smallest group identifier or that is at an earliest time domain location.

In a possible design of the third aspect, the M pieces of DCI are carried in L CORESET groups, and L is an integer greater than or equal to 2. The method further includes: The network device sends first indication information to the terminal device, where the first indication information indicates joint feedback of feedback information in the L CORESET groups.

According to a fourth aspect, an embodiment of this application provides a feedback information sending method. The method may be performed by a terminal device, or may be performed by a component (for example, a chip or a circuit) configured in the terminal device. The method may include: The terminal device receives M pieces of DCI from a network device, where each of the M pieces of DCI is for scheduling N transmissions of first data, values in DAI fields included in all of the M pieces of DCI are the same, where M is an integer greater than or equal to 2, and N is a positive integer. The terminal device sends feedback information of the first data to the network device, where the feedback information is included in a HARQ-ACK codebook, and a location of the feedback information in the HARQ-ACK codebook is determined based on first DCI of the M pieces of DCI.

In a possible design of the fourth aspect, the DAI field includes a first DAI and a second DAI. That values in DAI fields included in all of the M pieces of DCI are the same includes: Values of the first DAIs included in all of the M pieces of DCI are the same, and values of the second DAIs included in all of the M pieces of DCI are the same. The value of the first DAI is for indicating an accumulative count value of a quantity of times for which the terminal device is scheduled up to a PDCCH monitoring occasion and a cell for transmission of the first DCI, and the value of the second DAI is for indicating a total quantity of times for which the terminal device is scheduled up to the PDCCH monitoring occasion for transmission of the first DCI.

In a possible design of the fourth aspect, the DAI field includes a first DAI. That values in DAI fields included in all of the M pieces of DCI are the same includes: Values of the first DAIs included in all of the M pieces of DCI are the same. The value of the first DAI is for indicating an accumulative count value of a quantity of times for which the terminal device is scheduled up to a PDCCH monitoring occasion and a cell for transmission of the first DCI.

In a possible design of the fourth aspect, the first DCI is DCI that is of the M pieces of DCI and that is at an earliest time domain location. Alternatively, a time unit that is indicated by the first DCI and that is for sending the feedback information of the first data is an earliest time unit of time units that are indicated by the M pieces of DCI and that are for sending the feedback information of the first data. Alternatively, a time-frequency resource that is indicated by the first DCI and that is for sending the feedback information of the first data is a largest time-frequency resource of time-frequency resources that are indicated by the M pieces of DCI and that are for sending the feedback information of the first data. Alternatively, a time-frequency resource that is indicated by the first DCI and that is for sending the feedback information of the first data is a smallest time-frequency resource of time-frequency resources that are indicated by the M pieces of DCI and that are for sending the feedback information of the first data. Alternatively, the first DCI is carried in a first CORESET, and the first CORESET is a CORESET that is of CORESETs that carry the M pieces of DCI and that has a smallest CORESET identifier.

In a possible design of the fourth aspect, a CORESET group to which the CORESET carrying the first DCI belongs is a CORESET group that is of the CORESET groups carrying the M pieces of DCI and that has a smallest group identifier or that is at an earliest time domain location.

In a possible design of the fourth aspect, the M pieces of DCI are carried in L CORESET groups, and L is an integer greater than or equal to 2. The method further includes: The terminal device receives first indication information from the network device, where the first indication information indicates joint feedback of feedback information in the L CORESET groups.

According to a fifth aspect, an embodiment of this application provides a feedback information sending method. The method may be performed by a network device, or may be performed by a component (for example, a chip or a circuit) configured in the network device. The method may include: The network device sends M pieces of DCI to a terminal device, where each of the M pieces of DCI is for scheduling N transmissions of first data, the M pieces of DCI include first DCI and second DCI, a value in a DAI field in the first DCI is different from a value in a DAI field in the second DCI, where M is an integer greater than or equal to 2, and N is a positive integer. The network device receives feedback information of the first data from the terminal device, where the feedback information is included in a HARQ-ACK codebook, the feedback information occupies M locations in the HARQ-ACK codebook, and each of the M locations corresponds to one of the M pieces of DCI.

In this embodiment of this application, values in DAI indication fields in at least two of the M pieces of DCI are different. Therefore, the terminal device may send M pieces of feedback information of the first data, where the M pieces of feedback information are included in a same HARQ-ACK codebook, and the M pieces of feedback information respectively correspond to the M pieces of DCI. In this way, reliability of the feedback information is effectively improved.

In a possible design of the fifth aspect, the DAI field includes a first DAI and a second DAI. That a value in a DAI field in the first DCI is different from a value in a DAI field in the second DCI includes: A value of the first DAI in the first DCI is different from a value of the first DAI in the second DCI, and a value of the second DAI in the first DCI is different from a value of the second DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI. The value of the second DAI in the first DCI is for indicating a total quantity of times for which the terminal device is scheduled up to the PDCCH monitoring occasion for transmission of the first DCI. The value of the second DAI in the second DCI is for indicating a total quantity of times for which the terminal device is scheduled up to the PDCCH monitoring occasion for transmission of the second DCI.

In a possible design of the fifth aspect, the DAI field includes a first DAI. That a value in a DAI field in the first DCI is different from a value in a DAI field in the second DCI includes: A value of the first DAI in the first DCI is different from a value of the first DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI.

In a possible design of the fifth aspect, the M pieces of DCI are carried in L control resource set CORESET groups, and L is an integer greater than or equal to 2. The method further includes: The network device sends first indication information to the terminal device, where the first indication information indicates joint feedback of feedback information in the L CORESET groups.

According to a sixth aspect, an embodiment of this application provides a feedback information sending method. The method may be performed by a terminal device, or may be performed by a component (for example, a chip or a circuit) configured in the terminal device. The method may include: The terminal device receives M pieces of DCI from a network device, where each of the M pieces of DCI is for scheduling N transmissions of first data, the M pieces of DCI include first DCI and second DCI, a value in a DAI field in the first DCI is different from a value in a DAI field in the second DCI, where M is an integer greater than or equal to 2, and N is a positive integer. The terminal device sends feedback information of the first data to the network device, where the feedback information is included in a HARQ-ACK codebook, the feedback information occupies M locations in the HARQ-ACK codebook, and each of the M locations corresponds to one of the M pieces of DCI.

In a possible design of the sixth aspect, the DAI field includes a first DAI and a second DAI. That a value in a DAI field in the first DCI is different from a value in a DAI field in the second DCI includes: A value of the first DAI in the first DCI is different from a value of the first DAI in the second DCI, and a value of the second DAI in the first DCI is different from a value of the second DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI. The value of the second DAI in the first DCI is for indicating a total quantity of times for which the terminal device is scheduled up to the PDCCH monitoring occasion for transmission of the first DCI. The value of the second DAI in the second DCI is for indicating a total quantity of times for which the terminal device is scheduled up to the PDCCH monitoring occasion for transmission of the second DCI.

In a possible design of the sixth aspect, the DAI field includes a first DAI. That a value in a downlink assignment index DAI field in the first DCI is different from a value in a DAI field in the second DCI includes: A value of the first DAI in the first DCI is different from a value of the first DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI.

In a possible design of the sixth aspect, the M pieces of DCI are carried in L control resource set CORESET groups, and L is an integer greater than or equal to 2. The method further includes: The terminal device receives first indication information from the network device, where the first indication information indicates joint feedback of feedback information in the L CORESET groups.

In a possible design of the sixth aspect, after the terminal device receives the M pieces of downlink control information DCI from the network device, the method further includes: The terminal device combines and decodes remaining bit fields other than the DAI fields in the first DCI and the second DCI.

According to a seventh aspect, an embodiment of this application provides a feedback information sending method. The method may be performed by a network device, or may be performed by a component (for example, a chip or a circuit) configured in the network device. The method may include: The network device sends M pieces of DCI to a terminal device, where each of the M pieces of DCI is for scheduling N transmissions of first data, the M pieces of DCI correspond to L HARQ-ACK codebooks, the M pieces of DCI include first DCI and second DCI, a value in a DAI field in the first DCI is different from a value in a DAI field in the second DCI, where M and L are integers greater than or equal to 2, and N is a positive integer. The network device receives the L HARQ-ACK codebooks from the terminal device, where each HARQ-ACK codebook includes feedback information of the first data.

In this embodiment of this application, the M pieces of DCI may correspond to the L HARQ-ACK codebooks. Therefore, the terminal device may send the L HARQ-ACK codebooks, where each of the L HARQ-ACK codebooks includes the feedback information of the first data. In this way, reliability of the feedback information is effectively improved. In addition, values in DAI indication fields in at least two of the M pieces of DCI are different. Therefore, a problem of DAI indication ambiguity does not occur in a process of generating the HARQ-ACK codebook. In this way, it is ensured that the network device and the terminal device have a consistent understanding of a quantity of bits of the feedback information.

In a possible design of the seventh aspect, that the M pieces of DCI correspond to L HARQ-ACK codebooks includes: The M pieces of DCI are carried in L CORESET groups, and each CORESET group corresponds to one HARQ-ACK codebook.

In a possible design of the seventh aspect, the DAI field includes a first DAI and a second DAI. That a value in a DAI field in the first DCI is different from a value in a DAI field in the second DCI includes: A value of the first DAI in the first DCI is different from a value of the first DAI in the second DCI, and a value of the second DAI in the first DCI is different from a value of the second DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI. The value of the second DAI in the first DCI is for indicating a total quantity of times for which the terminal device is scheduled up to the PDCCH monitoring occasion for transmission of the first DCI. The value of the second DAI in the second DCI is for indicating a total quantity of times for which the terminal device is scheduled up to the PDCCH monitoring occasion for transmission of the second DCI.

In a possible design of the seventh aspect, the DAI field includes a first DAI. That a value in a DAI field in the first DCI is different from a value in a DAI field in the second DCI includes: A value of the first DAI in the first DCI is different from a value of the first DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI.

In a possible design of the seventh aspect, the method further includes: The network device sends second indication information to the terminal device, where the second indication information indicates separate feedback of feedback information corresponding to L CORESET groups.

According to an eighth aspect, an embodiment of this application provides a feedback information sending method. The method may be performed by a terminal device, or may be performed by a component (for example, a chip or a circuit) configured in the terminal device. The method may include: The terminal device receives M pieces of DCI from a network device, where each of the M pieces of DCI is for scheduling N transmissions of first data, the M pieces of DCI correspond to L HARQ-ACK codebooks, the M pieces of DCI include first DCI and second DCI, a value in a DAI field in the first DCI is different from a value in a DAI field in the second DCI, where M and L are integers greater than or equal to 2, and N is a positive integer. The terminal device sends the L HARQ-ACK codebooks to the network device, where each HARQ-ACK codebook includes feedback information of the first data.

In a possible design of the eighth aspect, that the M pieces of DCI correspond to L HARQ-ACK codebooks includes: The M pieces of DCI are carried in L CORESET groups, and each CORESET group corresponds to one HARQ-ACK codebook.

In a possible design of the eighth aspect, the DAI field includes a first DAI and a second DAI. That a value in a DAI field in the first DCI is different from a value in a DAI field in the second DCI includes: A value of the first DAI in the first DCI is different from a value of the first DAI in the second DCI, and a value of the second DAI in the first DCI is different from a value of the second DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI. The value of the second DAI in the first DCI is for indicating a total quantity of times for which the terminal device is scheduled up to the PDCCH monitoring occasion for transmission of the first DCI. The value of the second DAI in the second DCI is for indicating a total quantity of times for which the terminal device is scheduled up to the PDCCH monitoring occasion for transmission of the second DCI.

In a possible design of the eighth aspect, the DAI field includes a first DAI. That a value in a DAI field in the first DCI is different from a value in a DAI field in the second DCI includes: A value of the first DAI in the first DCI is different from a value of the first DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI.

In a possible design of the eighth aspect, the method further includes: The terminal device receives second indication information from the network device, where the second indication information indicates separate feedback of feedback information corresponding to L CORESET groups.

In a possible design of the eighth aspect, after the terminal device receives the M pieces of DCI from the network device, the method further includes: The terminal device combines and decodes remaining bit fields other than the DAI fields in the first DCI and the second DCI.

According to a ninth aspect, an embodiment of this application provides a communication apparatus. The apparatus may have a function of implementing the network device in any one of the first aspect or the possible designs of the first aspect, may have a function of implementing the network device in any one of the third aspect or the possible designs of the third aspect, may have a function of implementing the network device in any one of the fifth aspect or the possible designs of the fifth aspect, or may have a function of implementing the network device in any one of the seventh aspect or the possible designs of the seventh aspect. The apparatus may be a network device, or may be a chip included in the network device.

The apparatus has a function of implementing the terminal device in any one of the second aspect or the possible designs of the second aspect, has a function of implementing the terminal device in any one of the fourth aspect or the possible designs of the fourth aspect, has a function of implementing the terminal device in any one of the sixth aspect or the possible designs of the sixth aspect, or has a function of implementing the terminal device in any one of the eighth aspect or the possible designs of the eighth aspect. The apparatus may be a terminal device, or may be a chip included in the terminal device.

The function of the communication apparatus may be implemented by hardware, or may be implemented by hardware executing corresponding software. The hardware or the software includes one or more modules, units, or means (means) corresponding to the foregoing function.

In a possible design, a structure of the apparatus includes a processing module and a transceiver module. The processing module is configured to support the apparatus in performing a corresponding function of the network device in any one of the first aspect or the designs of the first aspect, a corresponding function of the terminal device in any one of the second aspect or the designs of the second aspect, a corresponding function of the network device in any one of the third aspect or the possible designs of the third aspect, a corresponding function of the terminal device in any one of the fourth aspect or the possible designs of the fourth aspect, a corresponding function of the network device in any one of the fifth aspect or the possible designs of the fifth aspect, a corresponding function of the terminal device in any one of the sixth aspect or the possible designs of the sixth aspect, a corresponding function of the network device in any one of the seventh aspect or the possible designs of the seventh aspect, or a corresponding function of the terminal device in any one of the eighth aspect or the possible designs of the eighth aspect. The transceiver module is configured to support communication between the apparatus and another communication device. For example, when the apparatus is a network device, the apparatus may send M pieces of DCI to a terminal device, and receive feedback information from the terminal device. The communication apparatus may further include a storage module. The storage module is coupled to the processing module, and stores program instructions and data that are necessary for the apparatus. In an example, the processing module may be a processor, the transceiver module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, to enable the apparatus to perform the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in any one of the eighth aspect or the possible designs of the eighth aspect. Optionally, the apparatus further includes a communication interface, and the processor is coupled to the communication interface. When the apparatus is a network device or a terminal device, the communication interface may be a transceiver or an input/output interface. When the apparatus is a chip included in the network device or the terminal device, the communication interface may be an input/output interface of the chip. Optionally, the transceiver may be a transceiver circuit, and the input/output interface may be an input/output circuit.

According to a tenth aspect, an embodiment of this application provides a chip system, including a processor. The processor is coupled to a memory, and the memory is configured to store a program or instructions. When the program or the instructions are executed by the processor, the chip system is enabled to implement the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in any one of the eighth aspect or the possible designs of the eighth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

According to an eleventh aspect, an embodiment of this application provides a computer-readable storage medium. The computer-readable storage medium stores a computer program or instructions. When the computer program or the instructions are executed, a computer is enabled to perform the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in any one of the eighth aspect or the possible designs of the eighth aspect.

According to a twelfth aspect, an embodiment of this application provides a computer program product. When a computer reads and executes the computer program product, the computer is enabled to perform the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in any one of the eighth aspect or the possible designs of the eighth aspect.

According to a thirteenth aspect, an embodiment of this application provides a communication system. The communication system includes the network device and at least one terminal device in the foregoing aspects.

### BRIEF DESCRIPTION OF DRAWINGS

FIG. 1 is a schematic diagram of a structure of a communication system to which embodiments of this application are applicable;
FIG. 2 is a schematic diagram of scheduling downlink data for a terminal device according to an embodiment of this application;
FIG. 3 is a schematic diagram of sending a plurality of repeated PDCCHs according to an embodiment of this application;
FIG. 4 is a schematic diagram of a CORESET according to an embodiment of this application;
FIG. 5 is a schematic flowchart of a feedback information sending method according to an embodiment of this application;
FIG. 6 shows a specific example of a feedback information sending method according to an embodiment of this application;
FIG. 7 is a schematic flowchart of another feedback information sending method according to an embodiment of this application;
FIG. 8 shows another specific example of a feedback information sending method according to an embodiment of this application;
FIG. 9 is a schematic flowchart of still another feedback information sending method according to an embodiment of this application;
FIG. 10 shows still another specific example of a feedback information sending method according to an embodiment of this application;
FIG. 11 is a schematic flowchart of still another feedback information sending method according to an embodiment of this application;
FIG. 12 shows still another specific example of a feedback information sending method according to an embodiment of this application;
FIG. 13 is a schematic diagram of a structure of a communication apparatus according to an embodiment of this application;
FIG. 14 is another schematic diagram of a structure of a communication apparatus according to an embodiment of this application;
FIG. 15 is a schematic diagram of a structure of another communication apparatus according to an embodiment of this application; and
FIG. 16 is another schematic diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system.

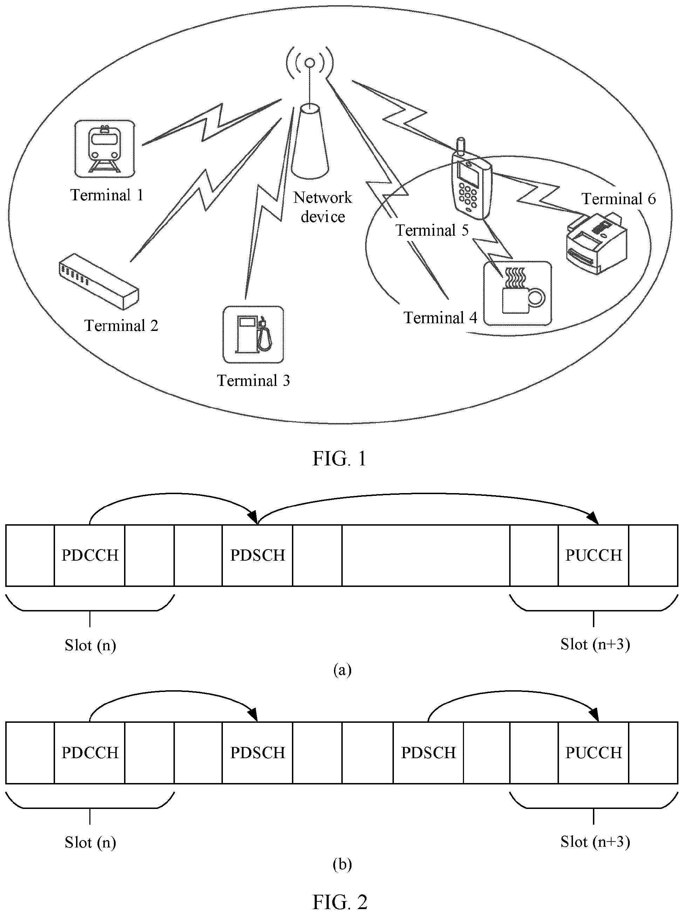

FIG. 1 is a schematic diagram of a structure of a communication system according to an embodiment of this application. The communication system includes a network device and at least one terminal device (for example, terminals 1 to 6 shown in FIG. 1). The network device may communicate with the at least one terminal device (for example, terminal device 1) through an uplink (uplink, UL) and a downlink (downlink, DL).

The network device in FIG. 1 may be an access network device, for example, a base station. The access network device corresponds to different devices in different systems. For example, the access network device may correspond to an eNB in a 4th generation (4th generation, 4G) mobile communication system, or may correspond to an access network device, for example, a gNB, in 5G in a 5G system. Certainly, the technical solutions provided in embodiments of this application may also be applied to a future mobile communication system. Therefore, the network device in FIG. 1 may also correspond to an access network device in the future mobile communication system.

It should be understood that there may be a plurality of network devices in the communication system, and one network device may provide a service for a plurality of terminal devices. A quantity of network devices and a quantity of terminal devices included in the communication system are not limited in embodiments of this application. The network device in FIG. 1 and each of some or all of the at least one terminal device may implement the technical solutions provided in embodiments of this application. In addition, various terminal devices shown in FIG. 1 are merely some examples of the terminal device. It should be understood that the terminal device in embodiments of this application is not limited thereto.

The following explains and describes some terms in embodiments of this application, to help a person skilled in the art have a better understanding.
(1) The terminal device is a device having a wireless transceiver function, and may be deployed on land, where the deployment includes indoor or outdoor, handheld, wearable, or vehicle-mounted deployment, may be deployed on water (for example, on a ship), or may be deployed in air (for example, on an airplane, a balloon, and a satellite). The terminal device may communicate with a core network through a radio access network (radio access network, RAN), and exchange voice and/or data with the RAN. The terminal device may be a mobile phone, a tablet computer, a computer having a wireless transceiver function, a mobile internet device, a wearable device, a virtual reality terminal device, an augmented reality terminal device, a wireless terminal in industrial control, a wireless terminal in self driving, a wireless terminal in telemedicine, a wireless terminal in a smart grid, a wireless terminal in transportation safety, a wireless terminal in a smart city, a wireless terminal in a smart home, or the like. An application scenario is not limited in embodiments of this application. Sometimes, the terminal device may also be referred to as user equipment (user equipment, UE), a mobile station, a remote station, or the like. A specific technology, a device form, and a name that are used by the terminal device are not limited in embodiments of this application.
   By way of example but not limitation, in embodiments of this application, the terminal device may alternatively be a wearable device. The wearable device may also be referred to as a wearable intelligent device, an intelligent wearable device, or the like, and is an umbrella term for wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus only on one type of application function and need to collaboratively work with other devices such as smartphones, for example, various smart bands, smart helmets, or smart jewelry for monitoring physical signs.
   The terminal device in embodiments of this application may alternatively be a vehicle-mounted module, a vehicle-mounted component, a vehicle-mounted chip, or a vehicle-mounted unit that is built in a vehicle as one or more components or units. The vehicle may use the vehicle-mounted module, a vehicle-mounted module assembly, the vehicle-mounted component, the vehicle-mounted chip, or the vehicle-mounted unit that is built in the vehicle to implement the method in this application.
(2) The network device, also referred to as an access network device, is a device that is in a network and that is configured to connect the terminal device to a wireless network. The network device may be a node in a radio access network, may also be referred to as a base station, or may also be referred to as a RAN node (or device). The network device may be an evolved NodeB (evolved NodeB, eNodeB) in an LTE system or an LTE-advanced (LTE-Advanced, LTE-A) system, or may be a next generation NodeB (next generation NodeB, gNodeB) in a 5G NR system, or may be a transmission reception point (transmission reception point, TRP), a baseband unit (baseband unit, BBU), a Wi-Fi access point (access point, AP), or the like, or may be a central unit (central unit, CU) and a distributed unit (distributed unit, DU). This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP); and the DU mainly supports a radio link control (radio link control, RLC) layer protocol, a medium access control (medium access control, MAC) layer protocol, and a physical layer protocol.
(3) It should be noted that the terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship between associated objects and represents that three relationships may exist. For example, A and/or B may represent the following three cases: Only A exists, both A and B exist, and only B exists. In addition, unless otherwise stated, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

The following describes a process in which a terminal device sends feedback information in embodiments of this application.

As shown in part (a) in FIG. 2, a network device may send a PDCCH to a terminal device, where the PDCCH carries DCI. The PDCCH may be for scheduling a PDSCH for the terminal device, where the PDSCH carries downlink data to be sent to the terminal device.

The terminal device may receive the DCI carried on the PDCCH, and determine, based on time domain resource indication information in the DCI, a time unit in which the PDSCH is located and a specific time domain resource occupied by the PDSCH in the time unit, to further receive the downlink data carried on the PDSCH. The time domain resource indication information may indicate one row in a time domain resource table, where each row in the time domain resource table includes one piece of indication information K0 and one piece of start and length indicator value (start and length indication value, SLIV) indication information. The indication information K0 indicates a quantity of time units between the time unit in which the PDSCH is located and a time unit in which the PDCCH is located. The SLIV indication information indicates a start symbol and a length of the specific time domain resource occupied by the PDSCH in the time unit in which the PDSCH is located. For example, it is assumed that the time unit is one slot (slot), and a value of the indication information K0 is 1. If the time unit in which the PDCCH is located is a slot (n), the time unit in which the PDSCH is located is a slot (n+1). Further, if the SLIV indication information indicates that the PDSCH starts from the second symbol and has a length of two symbols, it indicates that the PDSCH occupies the second symbol and the third symbol in the slot (n+1).

In embodiments of this application, the time unit may be one slot (slot), or may be one sub-slot (sub-slot). This is not specifically limited. In a case of a normal cyclic prefix, one slot includes 14 symbols, and in a case of an extended cyclic prefix, one slot includes 12 symbols. The sub-slot may include two symbols or seven symbols. The sub-slot may also be referred to as a mini-slot (mini-slot). A quantity of symbols included in one sub-slot is less than a quantity of symbols included in one slot. A specific quantity of symbols included in the sub-slot may be indicated by using higher layer signaling sent by the network device. After receiving the higher layer signaling indication, the terminal device may learn of the quantity of symbols included in the sub-slot. For example, the higher layer signaling may indicate that the quantity of symbols in the sub-slot is two symbols or seven symbols; or may indicate that one slot includes seven sub-slots, and the quantity of symbols in each sub-slot is two symbols by representing the slot as two symbols multiplied by 7; or may indicate that one slot includes two sub-slots, and the quantity of symbols in each sub-slot is seven symbols by representing the slot as seven symbols multiplied by 2. In embodiments of this application, the "slot" may be replaced with the "sub-slot". All symbols or time domain symbols mentioned in embodiments of this application are orthogonal frequency division multiplexing (orthogonal frequency division multiplexing, OFDM) symbols.

After receiving the downlink data carried on the PDSCH, the terminal device may send feedback information to the network device based on a data decoding result. The feedback information may be an acknowledgement (acknowledgement, ACK) indicating that the data is successfully received, or a negative acknowledgement (negative acknowledgement, NACK) indicating that the data fails to be received.

The terminal device may further determine, based on indication information K1 in the DCI, a time unit for sending the feedback information. The indication information K1 indicates a quantity of time units between the time unit for sending the feedback information by the terminal device and a time unit for receiving the PDSCH. This indicates that an "n+K1" timing relationship needs to be met between a time point at which the terminal device receives the downlink data and a time point at which the terminal device sends the feedback information to the network device. In other words, if the terminal device receives the PDSCH in the slot (n), the terminal device needs to send the feedback information to the network device in a slot (n+K1). During specific implementation, the indication information K1 may indicate a value in a K1 set, and the K1 set may be configured by the network device by using the higher layer signaling, or may be predefined. For example, it is assumed that the network device configures the K1 set as {1, 2, 3, 4, 5, 6, 7, 8}, and the indication information K1 in the DCI occupies three bits, if the indication information K1 indicates "001", it may indicate that a value of K1 is 2.

In embodiments of this application, the higher layer signaling is signaling sent by a higher protocol layer, where the higher protocol layer may include at least one protocol layer above a physical layer. Specifically, the higher protocol layer may include at least one of the following protocol layers: a MAC layer, an RLC layer, a PDCP layer, an RRC layer, and a non-access stratum (non-access stratum, NAS).

Further, the network device may indicate a quantity of repetitions of the PDSCH by using the higher layer signaling. That is, DCI carried on one PDCCH may schedule a plurality of repeated PDSCHs. In other words, one piece of DCI may schedule a plurality of transmissions of one PDSCH, where these repeated PDSCHs carry same downlink data to be sent to the terminal device. The terminal device may send feedback information to the network device based on a result of decoding the downlink data carried on the plurality of PDSCHs. To be specific, the plurality of repeated PDSCHs may correspond to a same piece of feedback information. If the terminal device successfully decodes the downlink data carried on one or more of the plurality of repeated PDSCHs, the terminal device may feed back an ACK to the network device. If the terminal device fails to decode the downlink data carried on all of the plurality of repeated PDSCHs, the terminal device may feed back a NACK to the network device.

As shown in part (b) in FIG. 2, a plurality of repeated PDSCHs may occupy consecutive time units in time domain, each PDSCH appears only once in one time unit, and each PDSCH is at a same time domain location in one time unit. Accordingly, a time unit in which a terminal device sends feedback information to a network device is determined based on the last PDSCH of the plurality of repeated PDSCHs. For example, it is assumed that a quantity of repetitions of a PDSCH is 2, and the PDSCH appears only once in one slot (slot). If the terminal device receives a PDCCH in a slot (n), and DCI carried on the PDCCH indicates that a value of K0 is 1 and a value of K1 is 1, the terminal device may receive the first PDSCH in a slot (n+1), receive the second PDSCH in a slot (n+2), and then send feedback information to the network device in a slot (n+3).

During actual application, the terminal device does not send feedback information piece by piece, but may generate a hybrid automatic repeat request-acknowledgement (hybrid automatic repeat request-acknowledgement, HARQ-ACK) codebook based on a plurality of pieces of feedback information to be sent together. The HARQ-ACK codebook includes a group of consecutive bits obtained through concatenating ACKs or NACKs that need to be fed back in a time unit.

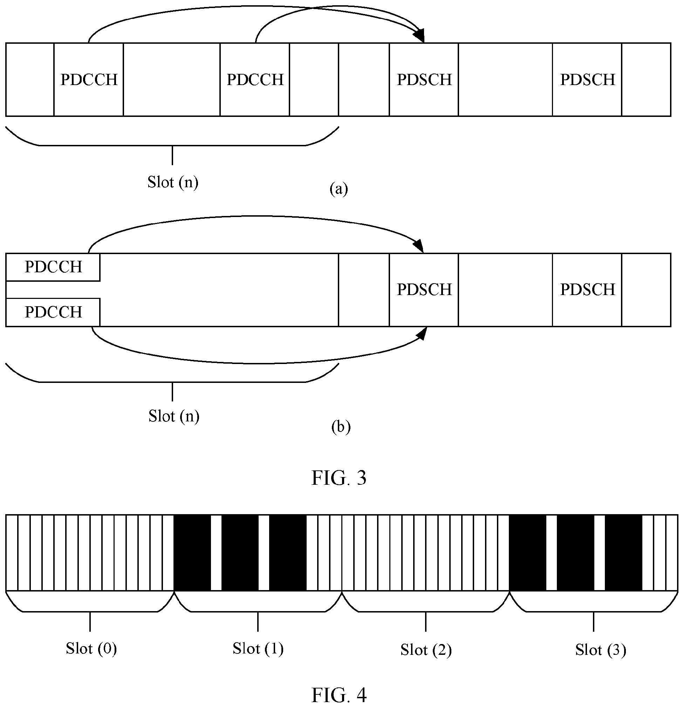

To ensure PDCCH channel reliability, the network device may alternatively repeatedly send a plurality of PDCCHs, and a plurality of pieces of DCI carried on the plurality of PDCCHs that are repeatedly sent may be for scheduling a same PDSCH or a plurality of repeated PDSCHs. The plurality of PDCCHs that are repeatedly sent may be repeated in time domain and/or frequency domain. Repetition in time domain may mean that the plurality of PDCCHs are repeated on different PDCCH monitoring occasions in time domain. Repetition in frequency domain may mean that the plurality of PDCCHs are repeated at different frequency domain resource locations in frequency domain. For example, in an example shown in part (a) in FIG. 3, a network device repeatedly sends two PDCCHs on different PDCCH monitoring occasions in time domain, and DCI carried on each PDCCH may be for scheduling two repeated PDSCHs in time domain. In an example shown in part (b) in FIG. 3, a network device repeatedly sends two PDCCHs on different frequency domain resources in frequency domain, and each PDCCH may be for scheduling two repeated PDSCHs in time domain. In this application, that a PDCCH schedules a PDSCH is equivalent to that DCI carried on a PDCCH schedules a PDSCH.

Optionally, the plurality of PDCCHs that are repeatedly sent may alternatively belong to different control resource set (control resource set, CORESET) groups (groups).

The network device may send X1^{th} indication information to the terminal device, where the X1^{th} indication information indicates one or more CORESETs. For each CORESET, the X1^{th} indication information may include the following information: an identifier of each CORESET, a quantity of time domain symbols of each CORESET (for example, one symbol, two symbols, or three symbols may be selected), a frequency domain resource location of each CORESET, and the like. The terminal device may determine the identifier, the frequency domain resource location, and the quantity of time domain symbols that are of each of the plurality of CORESETs based on the received X1^{th} indication information.

The network device may further send X2^{th} indication information to the terminal device, where the X2^{th} indication information indicates one or more search spaces. For each search space, the X2^{th} indication information may include at least one of the following information: an identifier of each search space, an identifier of a CORESET associated with each search space, and a periodicity, an offset, and a blind detection pattern (pattern) of each search space in time domain. The periodicity may be, for example, two slots. The offset refers to a specific slot in the periodicity, for example, the 2^{nd} slot. The pattern indicates specific locations at which blind detection is to be performed in the determined slot, and may be specifically indicated by using a 14-bit bitmap (bitmap). For example, an indication 10101010101010 indicates that PDCCH blind detection needs to be started at the 1^{st}, 3^{rd}, 5^{th}, 7^{th}, 9^{th}, 11^{th}, and 13^{th} symbols in one slot. These time domain locations are referred to as time domain start locations of a search space. The terminal device may determine the identifiers of the plurality of search spaces and the time domain start locations of the plurality of search spaces based on the received X2^{th} indication information. Because each search space is associated with one CORESET, a start location of a time domain location of the CORESET is determined through determining a time domain start location of the search space. The start location of the time domain location of the CORESET is the time domain start location of the search space associated with the CORESET. After the start location of the time domain location of the CORESET is determined, the time domain location of the CORESET may be determined based on a quantity of symbols of the CORESET, the time domain location of the CORESET may also be referred to as a PDCCH monitoring occasion.

For example, as shown in FIG. 4, a quantity of time domain symbols of CORESET p is 3, a periodicity of search space s is configured as two slots, an offset is the 2^{nd} slot, and a 14-bit bitmap is 10001000100000. It is assumed that search space s is associated with CORESET p, in this case, it may be determined that time domain start locations of the search space are the 1^{st} symbol, the 5^{th} symbol, and the 9^{th} symbol in the 2^{nd} slot of every two slots. Therefore, start locations of time domain locations of CORESET p are the 1^{st} symbol, the 5^{th} symbol, and the 9^{th} symbol in the 2^{nd} slot of every two slots. The quantity of symbols of CORESET p is 3, in this case, the time domain locations of the CORESET are the 1^{st} to 3^{rd} symbols, the 5^{th} to 7^{th} symbols, and the 9^{th} to 11^{th} symbols in the 2^{nd} slot of every two slots. For example, it may be determined that PDCCH monitoring occasions are in slot 1 and slot 3, each slot has three PDCCH monitoring occasions, and each PDCCH monitoring occasion has three symbols.

A terminal device may perform blind detection on the determined PDCCH monitoring occasions. After receiving a PDCCH, the terminal device may determine, based on a time-frequency location of a specific CORESET at which the PDCCH is received, or a specific CORESET in which the PDCCH is received, a specific CORESET on which the PDCCH is carried. That is, the terminal device may determine a specific CORESET on which DCI carried on the PDCCH is carried, in other words, determine a specific CORESET to which the PDCCH belongs, or determine a specific CORESET to which the DCI carried on the PDCCH belongs, or conversely, the CORESET carries the PDCCH or the DCI.

A network device may send X1^{th} indication information to the terminal device, where the X1^{th} indication information indicates one or more CORESETs. For each CORESET, the X1^{th} indication information may include the following information: a group identifier (represented as CORESETGroupIndex) corresponding to a CORESET group in which the CORESET is located. The CORESET group may also be referred to as a CORESET pool (pool). Therefore, the group identifier corresponding to the CORESET group in which the CORESET is located may also be referred to as a pool identifier (represented as CORESETPoolIndex) of the CORESET pool in which the CORESET is located. The terminal device receives the X1^{th} indication information, and therefore determines the group identifier corresponding to the CORESET group to which each of the plurality of CORESETs belongs. Candidate values of the group identifier may be 0 to W-1, where W represents a quantity of CORESET groups, which are CORESET group 0 to CORESET group W-1, where W is an integer greater than or equal to 2. One CORESET can belong only to one CORESET group, but one CORESET group may include a plurality of CORESETs.

For example, W=2. The network device indicates three CORESETs to the terminal device, and identifiers of the three CORESETs are respectively 1, 2, and 3. The three CORESETs are respectively represented as CORESET 1, CORESET 2, and CORESET 3, and group identifiers of the three CORESETs are respectively indicated as 0, 1, and 1. To be specific, CORESET 1 belongs to CORESET group 0, and both CORESET 2 and CORESET 3 belong to CORESET group 1. If for any CORESET, the X1^{th} indication information does not include a group identifier corresponding to the CORESET, it is considered that the CORESET belongs to CORESET group 0.

After the foregoing CORESET carrying the PDCCH or the DCI is determined, a specific CORESET group in which the PDCCH or the DCI is carried may be determined based on a CORESET group to which the CORESET belongs.

Transmission configuration indication (transmission configuration indication, TCI) information in embodiments of this application indicates quasi co-location (quasi co-location, QCL) information of a signal or a channel. The channel may be a PDCCH or a PDSCH, and the signal may be one or more of a channel state information reference signal (channel state information reference signal, CSI-RS), a demodulation reference signal (demodulation reference signal, DMRS), or a tracking reference signal (tracking reference signal, TRS). The QCL information is a spatial correlation parameter (which may also be referred to as a spatial correlation characteristic) of a downlink signal (such as the PDCCH/PDSCH/CSI-RS/DMRS/TRS). A quasi co-location may also be referred to as a quasi co-site and a co-location. The QCL information may also be referred to as QCL assumption information. The QCL information may be used to assist in describing receive beamforming information of a terminal device and a receiving procedure.

The TCI information is a quasi co-location QCL relationship that needs to be satisfied between a reference signal included in the TCI and the channel or signal, and mainly indicates that when the signal or the channel is received, information such as a spatial characteristic parameter of the signal or the channel is the same as, or similar to information such as a spatial characteristic parameter of the reference signal included in the TCI.

A TCI state (TCI state) may be configured with one or more referenced reference signals and associated QCL types (QCL types). There may be four QCL types: A, B, C, and D, which are obtained through different combinations or selections of {Doppler shift, Doppler spread, average delay, delay spread, spatial Rx parameter}. The TCI state includes the QCL information, or the TCI state is for indicating the QCL information.

The X1^{th} indication information for a specific CORESET may indicate a TCI of the CORESET, and indicate a reference signal corresponding to a QCL of the CORESET.

The transmission configuration indication TCI used by the PDSCH may be indicated by DCI that is for scheduling the PDSCH. Specifically, the network device configures a TCI table for the terminal device. A row in the TCI table may include two TCI states, for example, TCI 1 and TCI 2. If the row is indicated in the DCI, and the DCI schedules two transmissions of the PDSCH, TCIs used in the first transmission and the second transmission are TCI 1 and TCI 2 respectively. If the DCI schedules four transmissions, TCIs used in the four transmissions of the PDSCH may be TCI 1, TCI 2, TCI 1, and TCI 2, or TCI 1, TCI 1, TCI 2, and TCI 2. If the DCI schedules eight transmissions, TCIs used in the eight transmissions of the PDSCH may be TCI 1, TCI 2, TCI 1, TCI 2, TCI 1, TCI 2, TCI 1, and TCI 2, or TCI 1, TCI 1, TCI 2, TCI 2, TCI 1, TCI 1, TCI 2, and TCI 2.

Alternatively, a row in the TCI table may include one TCI state, for example, may be TCI 1. If the row is indicated in the DCI, and the DCI schedules N transmissions of the PDSCH, TCIs used for the N PDSCHs are all TCI 1.

Optionally, a plurality of pieces of DCI carried on a plurality of PDCCHs that are repeatedly sent may correspond to one or more HARQ-ACK codebooks.

### Embodiment 1

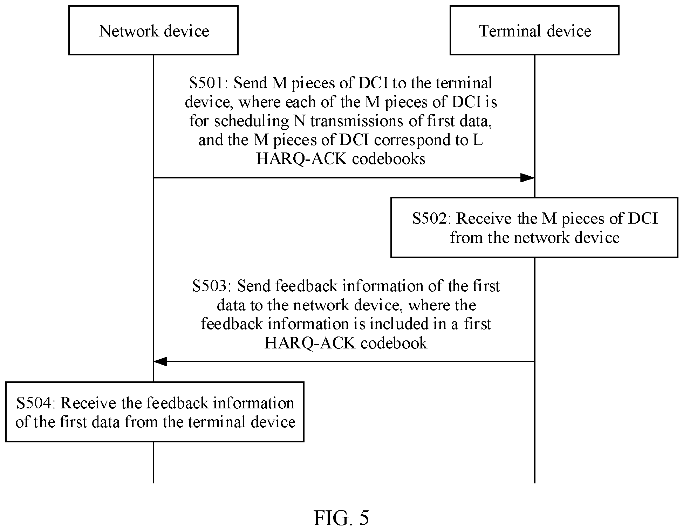

FIG. 5 is a schematic diagram of a feedback information sending method according to an embodiment of this application. The method specifically includes the following steps.

Step S501: A network device sends M pieces of DCI to a terminal device, where each of the M pieces of DCI is for scheduling N transmissions of first data, the M pieces of DCI correspond to L HARQ-ACK codebooks, where M and L are integers greater than or equal to 2, and N is a positive integer.

In this embodiment of this application, that a network device sends M pieces of DCI to a terminal device may be understood as that the network device sends M PDCCHs to the terminal device, where each PDCCH carries one of the M pieces of DCI. Optionally, the M pieces of DCI are repeated DCI. To be specific, the network device sends M repeated PDCCHs to the terminal device, where each PDCCH carries one of the M pieces of repeated DCI. Optionally, values of indication information K0 in the M pieces of DCI may be the same. When the values of the indication information K0 in the M pieces of DCI are the same, a time unit in which a specific PDCCH of the M PDCCHs is located may be used as a reference point for K0, to determine a time unit in which a PDSCH is located. For example, a time unit in which a PDCCH of the M PDCCHs is located may be used as the reference point for K0, where the PDCCH is at an earliest or latest time domain location.

Further, that each of the M pieces of DCI is for scheduling N transmissions of first data may be understood as that when a value of N is 1, each of the M PDCCHs is for scheduling a same PDSCH, where the PDSCH is for carrying the first data, to schedule one transmission of the first data. When the value of N is greater than 1, each of the M PDCCHs is for scheduling N repeated PDSCHs, and each of the N repeated PDSCHs is for carrying the first data, to schedule the N transmissions of the first data.

For example, when M=2, it indicates that the network device sends two pieces of repeated DCI to the terminal device. One of the two pieces of DCI is for scheduling the N transmissions of the first data, and the other one of the two pieces of DCI is also for scheduling the N transmissions of the first data.

In this embodiment of this application, that the M pieces of DCI correspond to L HARQ-ACK codebooks indicates a many-to-many relationship between the M pieces of DCI and the L HARQ-ACK codebooks. Each of the M pieces of DCI may correspond to one HARQ-ACK codebook, and the HARQ-ACK codebooks corresponding to different DCI of the M pieces of DCI may be the same or different. This is not limited.

In view of this, during specific implementation, that the M pieces of DCI correspond to L HARQ-ACK codebooks may have the following plurality of possible implementations.

In a possible implementation, that the M pieces of DCI correspond to L HARQ-ACK codebooks may be as follows. The M pieces of DCI are carried in L CORESET groups, each CORESET group corresponds to one HARQ-ACK codebook, and the L CORESET groups have L HARQ-ACK codebooks in total. Because each piece of DCI is carried in one of the L CORESET groups, each piece of DCI corresponds to one of the L HARQ-ACK codebooks. A HARQ-ACK codebook corresponding to one piece of DCI is a HARQ-ACK codebook corresponding to a CORESET group carrying the DCI.

Specifically, as described above, one CORESET group may include one or more CORESETs. In this case, that the M pieces of DCI are carried in L CORESET groups may mean that the M pieces of DCI are carried in CORESETs included in the L CORESET groups, or CORESETs that carry the M pieces of DCI belong to the L CORESET groups.

For example, the network device configures five CORESETs for the terminal device, and corresponding identifiers are respectively 0 to 4, which are represented as CORESET 0 to CORESET 4. CORESET 0 to CORESET 2 belong to CORESET group 0, and CORESET 3 and CORESET 4 belong to CORESET group 1. It is assumed that M=4, and four pieces of DCI are respectively carried in CORESET 0 to CORESET 3. Specifically, if three of the four pieces of DCI are respectively carried in CORESET 0 to CORESET 2, it indicates that the three pieces of DCI are carried in CORESET group 0; and if the other piece of DCI is carried in CORESET 3, it indicates that the DCI is carried in CORESET group 1. In this case, the four pieces of DCI are carried in two CORESET groups.

Further, that a HARQ-ACK codebook corresponds to one CORESET group may be as follows. If feedback information of data that is scheduled by DCI and that is received from one or more CORESETs included in the CORESET group needs to be fed back in a same time unit, the feedback information of the data is included in a same HARQ-ACK codebook for sending. The HARQ-ACK codebook is the HARQ-ACK codebook corresponding to the CORESET group.

In this case, the terminal device may generate a corresponding HARQ-ACK codebook for each of the L CORESET groups to which the CORESETs for carrying the M pieces of DCI belongs.

For example, the network device configures five CORESETs for the terminal device, and corresponding identifiers are respectively 0 to 4, which are represented as CORESET 0 to CORESET 4. CORESET 0 to CORESET 2 belong to CORESET group 0, and CORESET 3 and CORESET 4 belong to CORESET group 1. If one piece of DCI is received in each of CORESET 0, CORESET 1, and CORESET 2, and each of the three pieces of DCI indicates that feedback information of scheduled data is fed back in a slot (n), the feedback information of the data scheduled by the three pieces of DCI is included in a same HARQ-ACK codebook for sending in the slot (n) because the three pieces of DCI are carried in a same CORESET group. The HARQ-ACK codebook is a HARQ-ACK codebook corresponding to CORESET group 0.

If one piece of DCI is received in each of CORESET 3 and CORESET 4, and each of the two pieces of DCI indicates that feedback information of scheduled data is fed back in the slot (n), the feedback information of the data scheduled by the two pieces of DCI is included in a same HARQ-ACK codebook for sending in the slot (n). The HARQ-ACK codebook is a codebook corresponding to CORESET group 1. In other words, two HARQ-ACK codebooks are to be sent in the slot (n). One HARQ-ACK codebook corresponds to CORESET group 0, and the other HARQ-ACK codebook corresponds to CORESET group 1.

In another possible implementation, each of the M pieces of DCI may indicate, by using indication information K1, a time unit for sending feedback information of data scheduled by the DCI, and feedback information sent in a same time unit may be used for generating one HARQ-ACK codebook. Therefore, that the M pieces of DCI correspond to L HARQ-ACK codebooks may alternatively be as follows. Feedback information of data scheduled by one or more pieces of DCI is included in a same HARQ-ACK codebook for sending, where a same time unit is indicated for sending the feedback information. The HARQ-ACK codebook is a HARQ-ACK codebook corresponding to the one or more pieces of DCI.

In this case, the M pieces of DCI indicate L time units in total for sending the feedback information, and the terminal device may generate a corresponding HARQ-ACK codebook for each of the L time units.

For example, if a specific piece of DCI of the M pieces of DCI indicates that a time unit for sending feedback information is a first time unit, the terminal device may generate a HARQ-ACK codebook in the first time unit, the HARQ-ACK codebook is a HARQ-ACK codebook corresponding to the DCI, and the HARQ-ACK codebook includes feedback information of data scheduled by the DCI. If another piece of DCI of the M pieces of DCI indicates that a time unit for sending feedback information is a second time unit, the terminal device may generate another HARQ-ACK codebook in the second time unit, the another HARQ-ACK codebook is a HARQ-ACK codebook corresponding to the another piece of DCI, and the another HARQ-ACK codebook includes feedback information of data scheduled by the another piece of DCI. Herein, the time unit may be a slot or a sub-slot. For a specific manner of generating a HARQ-ACK codebook in each time unit, refer to descriptions in chapter 9 in the 3rd generation partnership project (3rd generation partnership project, 3GPP) technical specification (technical specification, TS) 38.213.

In another possible implementation, each of the M pieces of DCI may alternatively indicate, by using priority indication information, a priority for sending feedback information of data scheduled by the DCI, and feedback information that has a same priority and that needs to be sent in a same time unit may be used for generating one HARQ-ACK codebook. Therefore, that the M pieces of DCI correspond to the L HARQ-ACK codebooks may alternatively be as follows. Feedback information that is of data scheduled by one or more pieces of DCI in a same time unit and that has a same indicated feedback information priority is included in a same HARQ-ACK codebook for sending, where the HARQ-ACK codebook is a HARQ-ACK codebook corresponding to the one or more pieces of DCI.

In this case, the terminal device may generate, in each time unit that is indicated by the M pieces of DCI and that is for sending the feedback information, a corresponding HARQ-ACK codebook for each feedback information priority that is indicated by each piece of DCI and that is of the feedback information that needs to be sent in the time unit. After various combinations of the time units that are for sending the feedback information and that are indicated by the M pieces of DCI and the indicated feedback information priorities are considered, the terminal device generates the L HARQ-ACK codebooks in total.

If the time units that are for sending the feedback information and that are indicated by the M pieces of DCI are the same, the M pieces of DCI may indicate L feedback information priorities in total. In this case, the terminal device may generate one corresponding HARQ-ACK codebook for each of the L feedback information priorities.

For example, if a specific piece of DCI of the M pieces of DCI indicates that a time unit for sending feedback information is a first time unit and that a feedback information priority is priority 0, the terminal device may generate a HARQ-ACK codebook in the first time unit for priority 0, the HARQ-ACK codebook is a HARQ-ACK codebook corresponding to the DCI, and the HARQ-ACK codebook includes feedback information of data scheduled by the DCI. If another piece of DCI of the M pieces of DCI indicates that a time unit for sending feedback information is also the first time unit and that a feedback information priority is priority 1, the terminal device may generate another HARQ-ACK codebook in the first time unit for priority 1, the another HARQ-ACK codebook is a HARQ-ACK codebook corresponding to the another piece of DCI, and the another HARQ-ACK codebook includes feedback information of data scheduled by the another piece of DCI. In this case, the terminal device separately generates two HARQ-ACK codebooks for two priorities in the first time unit, and the two HARQ-ACK codebooks respectively correspond to the two pieces of DCI. For a specific manner of generating a HARQ-ACK codebook corresponding to each priority in a time unit, refer to descriptions in chapter 9 in the 3GPP protocol specification TS 38.213.

In another possible implementation, each of the M pieces of DCI may indicate, by using group identifier indication information, a group identifier for sending feedback information of data scheduled by the DCI, and one HARQ-ACK codebook may be generated for feedback information that has a same group identifier and that needs to be sent in a same time unit, where the group identifier is for indicating a specific feedback group to which the feedback information of the data scheduled by the DCI belongs. Therefore, that the M pieces of DCI correspond to the L HARQ-ACK codebooks may alternatively be as follows. Feedback information that is of data scheduled by one or more pieces of DCI in a same time unit and that has a same indicated feedback information group identifier is included in a same HARQ-ACK codebook for sending, where the HARQ-ACK codebook is a HARQ-ACK codebook corresponding to the one or more pieces of DCI.

In this case, the terminal device may generate, in each time unit that is indicated by the M pieces of DCI and that is for sending the feedback information, a corresponding HARQ-ACK codebook for each feedback information group identifier that is indicated by each piece of DCI and that is of the feedback information that needs to be sent in the time unit. After various combinations of the time units that are for sending the feedback information and that are indicated by the M pieces of DCI and the indicated feedback information group identifiers are considered, the terminal device generates the L HARQ-ACK codebooks in total.

If the time units that are for sending the feedback information and that are indicated by the M pieces of DCI are the same, the M pieces of DCI may indicate L feedback information group identifiers in total. In this case, the terminal device may generate one corresponding HARQ-ACK codebook for each of the L group identifiers.

For example, if a specific piece of DCI of the M pieces of DCI indicates that a time unit for sending feedback information is a first time unit and that a feedback information group identifier is group identifier 0, the terminal device may generate a HARQ-ACK codebook in the first time unit for group identifier 0, the HARQ-ACK codebook is a HARQ-ACK codebook corresponding to the DCI, and the HARQ-ACK codebook includes feedback information of data scheduled by the DCI. If another piece of DCI of the M pieces of DCI indicates that a time unit for sending feedback information is also the first time unit and that a feedback information group identifier is group identifier 1, the terminal device may generate another HARQ-ACK codebook in the first time unit for group identifier 1, the another HARQ-ACK codebook is a HARQ-ACK codebook corresponding to the another piece of DCI, and the another HARQ-ACK codebook includes feedback information of data scheduled by the another piece of DCI. In this case, the terminal device separately generates two HARQ-ACK codebooks for two group identifiers in the first time unit, and the two HARQ-ACK codebooks respectively correspond to the two pieces of DCI. For a specific manner of generating a HARQ-ACK codebook corresponding to each group identifier in a time unit, refer to descriptions in chapter 9 in the 3GPP protocol specification TS 38.213. The feedback information group identifier may be referred to as a HARQ-ACK codebook group identifier.

It should be understood that, in this embodiment of this application, there may be more possible implementations in which the M pieces of DCI correspond to the L HARQ-ACK codebooks. Examples are not described one by one herein.

Optionally, the network device may further send third indication information to the terminal device, where the third indication information indicates a value of M and/or a value of N. Alternatively, a value of M and/or a value of N in this embodiment of this application may be predefined. The "predefined" may be understood as defined, defined in advance, stored, pre-stored, pre-agreed, pre-configured, solidified, pre-burnt, or the like. The details are not described below again.

Step S502: The terminal device receives the M pieces of DCI from the network device.

Each of the M pieces of DCI may further indicate a time domain resource location of one scheduled PDSCH or N repeated scheduled PDSCHs. In this case, after receiving the M pieces of DCI, the terminal device may receive N pieces of first data, namely, N copies of the first data, at the time domain resource location indicated by the DCI.

Further, the terminal device may generate feedback information of the first data based on decoding results of the N copies of the first data. The feedback information may be an ACK or a NACK. If the terminal device successfully decodes one or more of the N copies of the first data, the feedback information is the ACK. If the terminal device fails to decode all of the N copies of the first data, the feedback information is the NACK.

Step S503: The terminal device sends the feedback information of the first data to the network device, where the feedback information is included in a first HARQ-ACK codebook, and the first HARQ-ACK codebook is one of the L HARQ-ACK codebooks.

As described above, the M pieces of DCI may correspond to the L HARQ-ACK codebooks. In this embodiment of this application, the terminal device may send the feedback information of the first data in one of the L HARQ-ACK codebooks rather than in each HARQ-ACK codebook. Therefore, uplink resource overheads are effectively reduced. In other words, a HARQ-ACK codebook other than the first HARQ-ACK codebook in the L HARQ-ACK codebooks may not include the feedback information of the first data.

In this embodiment of this application, if the M pieces of DCI are carried in the L CORESET groups, and each CORESET group corresponds to one HARQ-ACK codebook, the first HARQ-ACK codebook that includes the feedback information of the first data may be a HARQ-ACK codebook corresponding to a first CORESET group, and the first CORESET group is one of the L CORESET groups.

In a possible implementation, the first CORESET group may be a CORESET group that is of the L CORESET groups and that has a smallest group identifier or that is at an earliest time domain location. Herein, the time domain location of the CORESET group may be understood as a time domain location of a CORESET included in the CORESET group. In this case, the CORESET group that is at the earliest time domain location may be one of the L CORESET groups that includes a CORESET that is at an earliest time domain location. If the L CORESET groups include K CORESET groups that are at the earliest time domain location, a CORESET group that is of the K CORESET groups and that has a smallest group identifier may be determined as the first CORESET group, where K is an integer less than or equal to L. It may be understood that a time domain location of a CORESET may be determined based on a time domain parameter of a search space associated with the CORESET. The time domain parameter herein may include a periodicity, an offset, and a pattern (pattern).

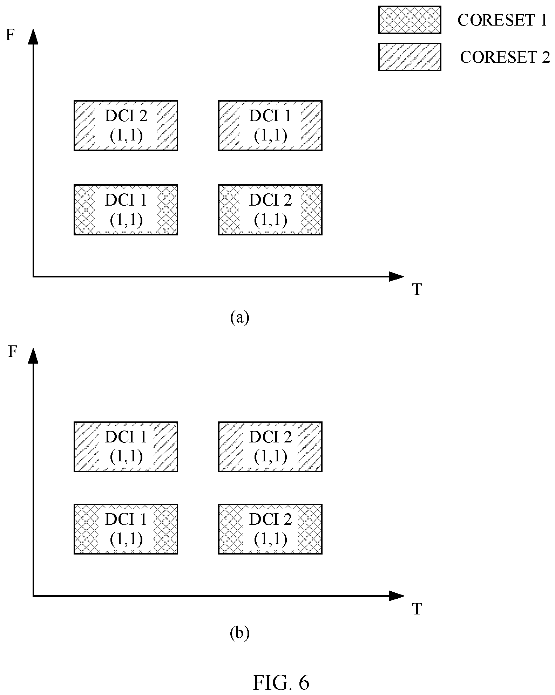

For example, in an example shown in part (a) in FIG. 6, two pieces of DCI 1 are repeated. A group identifier of a CORESET group in which a CORESET carrying the first piece of DCI 1 is located is 0, and a group identifier of a CORESET group in which a CORESET carrying the second piece of DCI 1 is located is 1. In this case, CORESET group 0 with a smaller group identifier is selected as the first CORESET group. Accordingly, the first HARQ-ACK codebook is a HARQ-ACK codebook corresponding to CORESET group 0, and the terminal device sends the feedback information of the first data in the HARQ-ACK codebook corresponding to CORESET group 0.

For another example, in an example shown in part (b) in FIG. 6, two pieces of DCI 1 are repeated. A group identifier of a CORESET group in which a CORESET carrying the first piece of DCI 1 is located is 0, and a group identifier of a CORESET group in which a CORESET carrying the second piece of DCI 1 is located is 1. CORESET group 0 and CORESET group 1 include CORESETs that are all at an earliest time domain location. In this case, CORESET group 0 with a smaller group identifier is selected as the first CORESET group. Accordingly, the first HARQ-ACK codebook is a HARQ-ACK codebook corresponding to CORESET group 0, and the terminal device sends the feedback information of the first data in the HARQ-ACK codebook corresponding to CORESET group 0.

In another possible implementation, the first CORESET group may be a CORESET group to which a first CORESET belongs. When TCIs used in the N transmissions of the first data are the same, a TCI of the first CORESET is the same as the TCIs used in the N transmissions of the first data. To be specific, the first CORESET is a CORESET that is of the CORESETs carrying the M pieces of DCI and whose TCI is the same as the TCIs used in the N transmissions of the first data.

When TCIs used in at least two of the N transmissions of the first data are different, a TCI of the first CORESET is the same as a TCI used in the first transmission or the last transmission of the first data. To be specific, the first CORESET is a CORESET that is of the CORESETs carrying the M pieces of DCI and whose TCI is the same as the TCI used in the first transmission or the last transmission of the first data.

It should be noted that the TCIs used in the N transmissions of the first data may be indicated by using a TCI indication field in the DCI. To be specific, each of the M pieces of DCI includes one TCI indication field, and the TCI indication field is for indicating the TCIs used in the N transmissions of the first data. Values in the TCI indication fields in all of the M pieces of DCI are the same.

For example, in an example shown in part (a) in FIG. 6, two pieces of DCI 1 are repeated. It is assumed that the TCIs used in the N transmissions of the scheduled first data indicated by the two pieces of DCI 1 are both TCIs 1. If a TCI of a CORESET that carries the first piece of DCI 1 is TCI 1, and a TCI of a CORESET that carries the second piece of DCI 1 is TCI 2, in this case, the CORESET that carries the first piece of DCI 1 is selected as the first CORESET. CORESET group 0 to which the CORESET belongs is selected as the first CORESET group because the TCI of the CORESET is the same as the TCIs used in the N transmissions of the scheduled first data. Accordingly, the first HARQ-ACK codebook is a HARQ-ACK codebook corresponding to CORESET group 0, and the terminal device sends the feedback information of the first data in the HARQ-ACK codebook corresponding to CORESET group 0.

For another example, in an example shown in part (a) in FIG. 6, two pieces of DCI 1 are repeated. It is assumed that the TCIs used in the N transmissions of the scheduled first data indicated by the two pieces of DCI 1 are different. For example, TCI 1 is used in the first transmission of the scheduled first data indicated by the two pieces of DCI 1, and TCI 2 is used in the second transmission of the scheduled first data indicated by the two pieces of DCI 1. If a TCI of a CORESET that carries the first piece of DCI 1 is TCI 1, and a TCI of a CORESET that carries the second piece of DCI 1 is TCI 2, in this case, the CORESET that carries the first piece of DCI 1 is selected as the first CORESET, based on a principle that the TCI of the first CORESET is the same as the TCI used in the first transmission of the first data. CORESET group 0 to which the CORESET belongs is selected as the first CORESET group because the TCI of the CORESET is the same as the TCI used in the first transmission of the scheduled first data. Accordingly, the first HARQ-ACK codebook is a HARQ-ACK codebook corresponding to CORESET group 0, and the terminal device sends the feedback information of the first data in the HARQ-ACK codebook corresponding to CORESET group 0.

In this embodiment of this application, the first HARQ-ACK codebook including the feedback information of the first data may alternatively be a HARQ-ACK codebook corresponding to first DCI. It should be understood that the HARQ-ACK codebook corresponding to the first DCI may be a HARQ-ACK codebook corresponding to a CORESET group to which a CORESET carrying the first DCI belongs, or may be a HARQ-ACK codebook sent in a time unit that is indicated by the first DCI and that is for sending the feedback information of the first data, where the time unit may be a slot or a sub-slot. For another specific implementation of the HARQ-ACK codebook corresponding to the first DCI, refer to the descriptions of the plurality of implementations of the HARQ-ACK codebook corresponding to each piece of DCI in step S501. Details are not described herein again.

In a possible implementation, the first DCI may be DCI that is of the M pieces of DCI and that is at an earliest time domain location. For example, in an example shown in part (a) in FIG. 6, two pieces of DCI 1 are repeated, and the first piece of DCI 1 is located before the second piece of DCI 1 in time domain. In this case, the first piece of DCI 1 may be used as the first DCI. Accordingly, the first HARQ-ACK codebook is a HARQ-ACK codebook corresponding to CORESET group 0 to which the first piece of DCI 1 belongs.

If B pieces of DCI of the M pieces of DCI are all at an earliest time domain location, DCI that is of the M pieces of DCI and that is at a lowest frequency domain location may be used as the first DCI, or DCI that is of the M pieces of DCI and that has a smallest CORESET identifier may be used as the first DCI. B is an integer less than or equal to M.

For example, in an example shown in part (b) in FIG. 6, two pieces of DCI 1 are repeated, and time domain locations of the two pieces of DCI 1 are the same. In this case, based on a principle of selecting DCI that is at a lower frequency domain location, the first piece of DCI 1 that is at a lower frequency location may be used as the first DCI. Alternatively, the first piece of DCI 1 in CORESET 1 may be used as the first DCI based on a principle of selecting DCI that has a smallest identifier of a CORESET in which the DCI is located. Accordingly, the first HARQ-ACK codebook is a HARQ-ACK codebook corresponding to CORESET group 0 to which the first piece of DCI 1 belongs.

In another possible implementation, a time unit that is indicated by the first DCI and that is for sending the feedback information of the first data is an earliest time unit of time units that are indicated by the M pieces of DCI and that are for sending the feedback information of the first data. That is, the first DCI is DCI that is of the M pieces of DCI and that indicates the earliest time unit for sending the feedback information of the first data.

For example, in an example shown in part (a) in FIG. 6, two pieces of DCI 1 are repeated. If the first piece of DCI 1 indicates that the feedback information of the scheduled first data is sent in a first sub-slot, and the second piece of DCI 1 indicates that the feedback information of the scheduled first data is sent in a second sub-slot, in this case, the first piece of DCI 1 may be used as the first DCI. Accordingly, the first HARQ-ACK codebook is a HARQ-ACK codebook sent in the first sub-slot.

In another possible implementation, a time-frequency resource that is indicated by the first DCI and that is for sending the feedback information of the first data is a largest time-frequency resource of time-frequency resources that are indicated by the M pieces of DCI and that are for sending the feedback information of the first data.

For example, in an example shown in part (a) in FIG. 6, two pieces of DCI 1 are repeated. If the first piece of DCI 1 includes one piece of resource indication information that indicates a time-frequency resource for sending feedback information, the terminal device determines, based on a quantity of bits of the feedback information and the indication information in the DCI, time-frequency resource 1 for sending the feedback information. It is assumed that time-frequency resource 1 corresponds to two symbols in time domain, and corresponds to five RBs resource blocks (resource blocks, RBs) in frequency domain. In this case, time-frequency resource 1 occupies 10 RBs in total. The second piece of DCI 1 includes one piece of resource indication information that indicates a time-frequency resource for sending feedback information, the terminal device determines, based on a quantity of bits of the feedback information and the indication information in the DCI, time-frequency resource 2 for sending the feedback information. It is assumed that time-frequency resource 2 corresponds to two symbols in time domain, and corresponds to three RBs in frequency domain. In this case, time-frequency resource 2 occupies six RBs in total. In this case, the first piece of DCI 1 may be used as the first DCI. Accordingly, the first HARQ-ACK codebook is a HARQ-ACK codebook sent on the five RBs indicated by the first piece of DCI 1.

In another possible implementation, a time-frequency resource that is indicated by the first DCI and that is for sending the feedback information of the first data is a smallest time-frequency resource of time-frequency resources that are indicated by the M pieces of DCI and that are for sending the feedback information of the first data.

For example, in an example shown in part (a) in FIG. 6, two pieces of DCI 1 are repeated. If the first piece of DCI 1 includes one piece of resource indication information that indicates a time-frequency resource for sending feedback information, the terminal device determines, based on a quantity of bits of the feedback information and the indication information in the DCI, time-frequency resource 1 for sending the feedback information. It is assumed that time-frequency resource 1 corresponds to two symbols in time domain, and corresponds to five RBs resource blocks (resource blocks, RBs) in frequency domain. In this case, time-frequency resource 1 occupies 10 RBs in total. The second piece of DCI 1 includes one piece of resource indication information that indicates a time-frequency resource for sending feedback information, the terminal device determines, based on a quantity of bits of the feedback information and the indication information in the DCI, time-frequency resource 2 for sending the feedback information. It is assumed that time-frequency resource 2 corresponds to two symbols in time domain, and corresponds to three RBs in frequency domain. In this case, time-frequency resource 2 occupies six RBs in total. In this case, the second piece of DCI 1 may be used as the first DCI. Accordingly, the first HARQ-ACK codebook is a HARQ-ACK codebook sent on the three RBs indicated by the second piece of DCI 1.

In another possible implementation, the first DCI is carried in a first CORESET, and the first CORESET is a CORESET that is of CORESETs that carry the M pieces of DCI and that has a smallest CORESET identifier.

For example, in an example shown in part (a) in FIG. 6, two pieces of DCI 1 are repeated, where the first piece of DCI 1 is carried in CORESET 1, and the second piece of DCI 1 is carried in CORESET 2. In this case, the first piece of DCI 1 may be used as the first DCI because an identifier of CORESET 1 is smaller. Accordingly, the first HARQ-ACK codebook may be a HARQ-ACK codebook corresponding to a CORESET group to which CORESET 1 belongs.

Step S504: The network device receives the feedback information of the first data from the terminal device.

### Embodiment 2

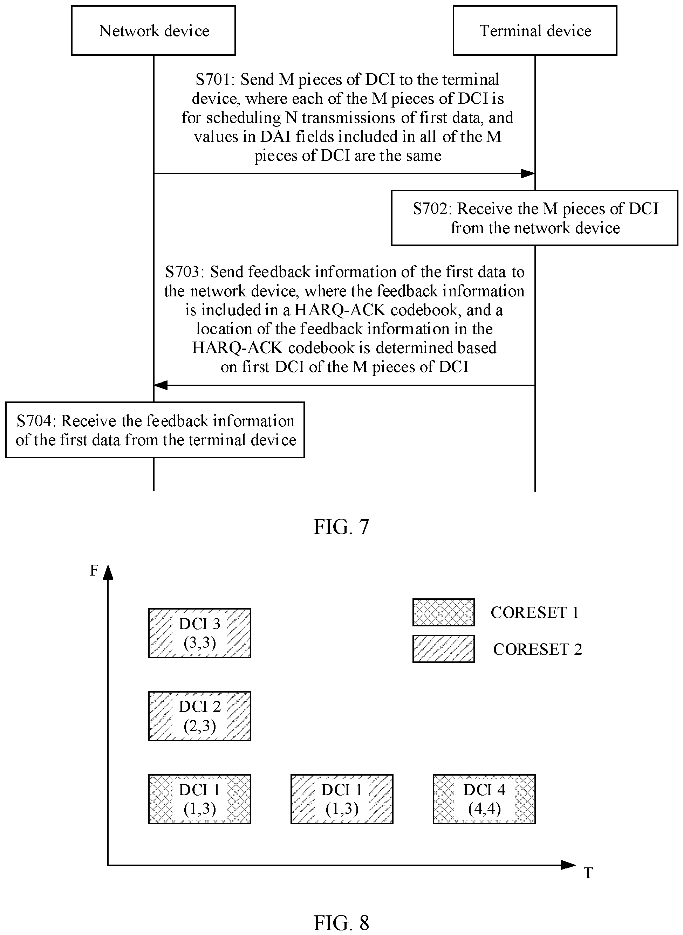

FIG. 7 is a schematic diagram of another feedback information sending method according to an embodiment of this application. The method specifically includes the following steps.

Step S701: A network device sends M pieces of DCI to a terminal device, where each of the M pieces of DCI is for scheduling N transmissions of first data, values in downlink assignment index (downlink assignment index, DAI) fields included in all of the M pieces of DCI are the same, where M is an integer greater than or equal to 2, and N is a positive integer.

In step S701, for a specific implementation of the M pieces of DCI and how each piece of DCI schedules the N transmissions of the first data, refer to the descriptions in step S501 in Embodiment 1. Details are not described herein again.

In this embodiment of this application, the DCI includes one DAI field. The DAI field is used by the terminal device to determine a quantity of times of scheduling of data or an amount of data scheduled by the network device for the terminal device, and further determine, based on the quantity of times of scheduling of data or the amount of scheduled data, a quantity of feedback information that needs to be included in one HARQ-ACK codebook and a location of the feedback information of each piece of scheduled data in the HARQ-ACK codebook. The quantity of feedback information included in the HARQ-ACK codebook may also be understood as a quantity of bits included in the HARQ-ACK codebook.

During specific implementation, the DAI field may include a first DAI and/or a second DAI. The first DAI and the second DAI refer to two pieces of indication information included in the DAI field. The first DAI may also be referred to as a counter DAI or C-DAI for short, and the second DAI may also be referred to as a total DAI or T-DAI for short. If the DAI field includes the first DAI and the second DAI, the indication information in the DAI field may be represented as (first DAI, second DAI) or (C-DAI, T-DAI).

In a possible implementation, the DAI field may include the first DAI and the second DAI. Accordingly, that values in DAI fields included in all of the M pieces of DCI are the same may be as follows. Values of the first DAIs included in all of the M pieces of DCI are the same, and values of the second DAIs included in all of the M pieces of DCI are also the same. The value of the first DAI is for indicating an accumulative count value of a quantity of times for which the terminal device is scheduled up to a PDCCH monitoring occasion and a cell for transmission of first DCI, and the value of the second DAI is for indicating a total quantity of times for which the terminal device is scheduled up to the PDCCH monitoring occasion for transmission of the first DCI.

In other words, the value of the first DAI is for indicating an accumulative count value of a quantity of times for which the network device schedules data for the terminal device up to a PDCCH monitoring occasion and a cell for transmission of the first DCI. The value of the second DAI is for indicating a total quantity of times for which the network device schedules the data for the terminal device up to the PDCCH monitoring occasion for transmission of the first DCI. For specific indication content of the first DAI and the second DAI, refer to descriptions in chapter 9 in the 3GPP protocol specification TS 38.213 V16.0.0 (December 2019).

In another possible implementation, the DAI field may include the first DAI, and the DAI field may further include the second DAI or may not include the second DAI. This is not limited in this application. Accordingly, that values in DAI fields included in all of the M pieces of DCI are the same may alternatively be as follows. Values of the first DAIs included in all of the M pieces of DCI are the same. The value of the first DAI is for indicating an accumulative count value of a quantity of times for which the terminal device is scheduled up to a PDCCH monitoring occasion and a cell for transmission of the first DCI.

It should be noted that, in this implementation, when the DAI field includes the second DAI, whether values of the second DAIs included in all of the M pieces of DCI are the same is not limited in this application. If the values of the second DAIs included in all of the M pieces of DCI are also the same, this implementation is actually the same as the foregoing first implementation. If the values of the second DAIs included in two pieces of DCI of the M pieces of DCI are different, the value of the second DAI in each piece of DCI may be for indicating a total quantity of times for which the terminal device is scheduled up to a PDCCH monitoring occasion for transmission of the DCI.

The first DCI in the foregoing two possible implementations may be DCI that is of the M pieces of DCI and that is at an earliest time domain location. Alternatively, the first DCI may be DCI that is of the M pieces of DCI and that indicates an earliest time unit for sending feedback information of the first data. Alternatively, the first DCI may be DCI that is of the M pieces of DCI and that indicates a largest time-frequency resource for sending feedback information of the first data. Alternatively, the first DCI may be DCI that is of the M pieces of DCI and that indicates a smallest time-frequency resource for sending feedback information of the first data. Alternatively, the first DCI may be DCI that is carried in a first CORESET, and the first CORESET herein is a CORESET that is of CORESETs that carry the M pieces of DCI and that has a smallest CORESET identifier. Alternatively, a CORESET group to which a CORESET carrying the first DCI belongs may be a CORESET group that is of CORESET groups carrying the M pieces of DCI and that has a smallest group identifier or that is at an earliest time domain location.

It should be noted that a specific implementation of the first DCI may be the same as that in Embodiment 1. For details, refer to the descriptions of the first DCI in step S503 in Embodiment 1. The details are not described herein again.

Optionally, the network device may further send third indication information to the terminal device, where the third indication information indicates a value of M and/or a value of N. Alternatively, a value of M and/or a value of N in embodiments of this application may be predefined.

Step S702: The terminal device receives the M pieces of DCI from the network device.

Step S703: The terminal device sends the feedback information of the first data to the network device, where the feedback information is included in a HARQ-ACK codebook, and a location of the feedback information in the HARQ-ACK codebook is determined based on the first DCI of the M pieces of DCI.

In this embodiment of this application, the HARQ-ACK codebook is a HARQ-ACK codebook corresponding to the M pieces of DCI. In other words, the HARQ-ACK codebook corresponding to the M pieces of DCI is a same HARQ-ACK codebook. A codebook corresponding to a HARQ-ACK corresponding to each of the M pieces of DCI may be determined by using the method according to Embodiment 1.

The M pieces of DCI may be carried in L CORESET groups, to be specific, the CORESETs that carry the M pieces of DCI may belong to the L CORESET groups, where L is a positive integer. For a specific implementation in which the M pieces of DCI are carried in the L CORESET groups, refer to the descriptions in Embodiment 1.

Based on this, the network device may send first indication information to the terminal device, where the first indication information indicates joint feedback (joint feedback) of feedback information in the L CORESET groups. The joint feedback means that feedback information of downlink data scheduled by DCI that is received on a PDCCH monitoring occasion in the L CORESET groups is jointly sent in a same HARQ-ACK codebook. In other words, the L CORESET groups correspond to a same HARQ-ACK codebook, and the HARQ-ACK codebook is a HARQ-ACK codebook used for the joint feedback. Accordingly, when the M pieces of DCI indicate that feedback information of data scheduled by the M pieces of DCI is fed back in a same time unit, the terminal device may jointly feed back, in one HARQ-ACK codebook, the feedback information of N pieces of data scheduled by the M pieces of DCI.

Specifically, that the location of the feedback information of the first data in the HARQ-ACK codebook is determined based on the first DCI of the M pieces of DCI may be understood as: determining the location of the feedback information of the first data in the HARQ-ACK codebook based on DAI indication information indicated in a DAI field in the first DCI. For a manner of determining the first DCI, refer to the descriptions in step S503 in Embodiment 1. Details are not described herein again.

For example, if a first DAI (namely, a C-DAI) in the first DCI indicates that the network device has scheduled data for the terminal device for n times up to the first DCI, the feedback information of the first data occupies an n^{th} location in the HARQ-ACK codebook.

It should be understood that a quantity of bits included in the feedback information is not limited in this embodiment of this application. Therefore, that the feedback information of the first data occupies an n^{th} location in the HARQ-ACK codebook does not necessarily indicate that the feedback information of the first data occupies the n^{th} bit location in the HARQ-ACK codebook or the feedback information of the first data is the n^{th} bit in the HARQ-ACK codebook, because one piece of feedback information may include one or more bits.

It can be learned that in this embodiment of this application, when the network device sends the M pieces of DCI for scheduling the N transmissions of the first data, because the values in the DAI indication fields included in all of the M pieces of DCI are the same, the terminal device may generate one HARQ-ACK codebook based on the M pieces of DCI, for example, one HARQ-ACK codebook used for the joint feedback, and send the feedback information of the first data at a first location in the HARQ-ACK codebook. The first location is determined based on the first DCI, to be specific, is determined based on the DAI field in the first DCI. In this way, uplink resource overheads are effectively reduced.

Because the values in the DAI fields included in all of the M pieces of DCI are the same, when the terminal device receives DCI other than the first DCI of the M pieces of DCI, it may be considered that no new DCI is received, to be specific, it is considered that a copy of the first DCI is received, and it is not considered that a new piece of DCI is received. Because the location occupied by the feedback information of the first data in the HARQ-ACK codebook is determined based only on the DAI indication information in the first DCI of the M pieces of DCI, a problem that DAI indication information in DCI is ambiguous when a plurality of pieces of repeated DCI are sent may be effectively avoided, thereby improving feedback information reliability, so that the network device and the terminal device have a consistent understanding of the quantity of bits of the feedback information. In this way, large-scale retransmission is avoided.

Step S704: The network device receives the feedback information of the first data from the terminal device.

For example, in an example shown in FIG. 8, two pieces of DCI 1 are repeated, and values in DAI fields in the two pieces of DCI 1 are the same. Therefore, the second piece of DCI 1 may be considered as a copy of the first piece of DCI 1. The terminal device may generate a HARQ-ACK codebook based on the first piece of DCI 1, DCI 2, DCI 3, and DCI 4. A location of feedback information of data scheduled by the two pieces of DCI 1 in the HARQ-ACK codebook is determined based on DAI indication information in the first piece of DCI 1.

If each piece of feedback information occupies one bit, it can be learned from a value in a DAI field in each piece of DCI shown in FIG. 8 that the HARQ-ACK codebook includes four bits in total, and the feedback information of the data scheduled by the two pieces of DCI 1 occupies the first bit location in the HARQ-ACK codebook.

### Embodiment 3

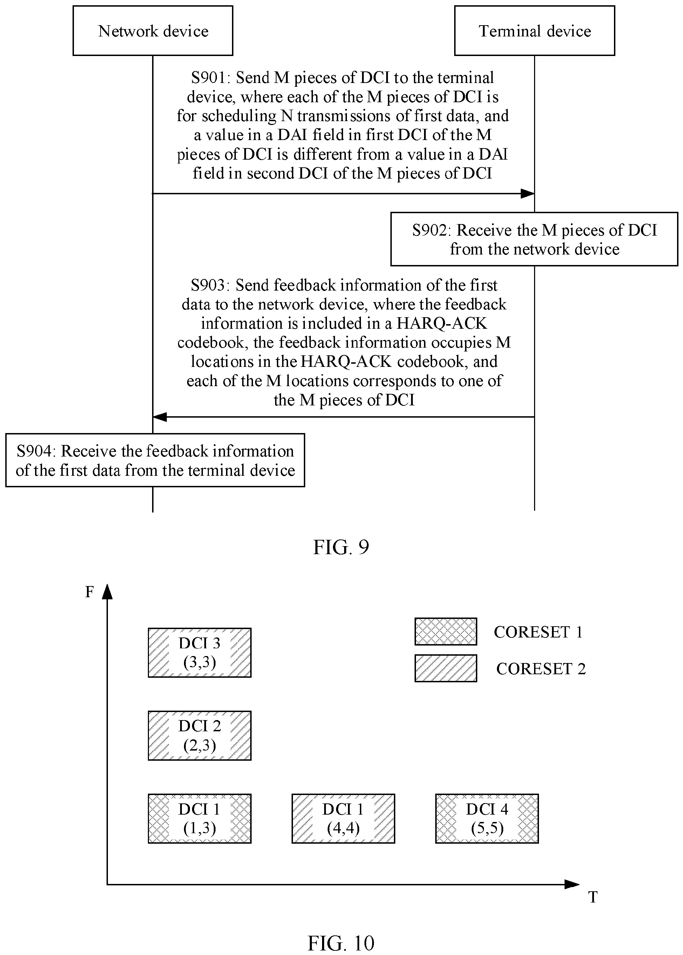

FIG. 9 is a schematic diagram of still another feedback information sending method according to an embodiment of this application. The method specifically includes the following steps.

Step S901: A network device sends M pieces of DCI to a terminal device, where each of the M pieces of DCI is for scheduling N transmissions of first data, the M pieces of DCI include first DCI and second DCI, a value in a DAI field in the first DCI is different from a value in a DAI field in the second DCI, where M is an integer greater than or equal to 2, and N is a positive integer.

In step S901, for a specific implementation of the M pieces of DCI and how each piece of DCI schedules the N transmissions of the first data, refer to the descriptions in step S501 in Embodiment 1. Details are not described herein again.

Similar to that in Embodiment 2, the DAI field in the DCI may include a first DAI and/or a second DAI. The first DAI and the second DAI refer to two pieces of indication information included in the DAI field. The first DAI may also be referred to as a counter DAI or C-DAI for short, and the second DAI may also be referred to as a total DAI or T-DAI for short. If the DAI field includes the first DAI and the second DAI, the indication information in the DAI field may be represented as (first DAI, second DAI) or (C-DAI, T-DAI).

In a possible implementation, the DAI field may include the first DAI and the second DAI. Accordingly, that the value in the DAI field in the first DCI of the M pieces of DCI is different from the value in the DAI field in the second DCI of the M pieces of DCI may be as follows. A value of the first DAI in the first DCI is different from a value of the first DAI in the second DCI, and a value of the second DAI in the first DCI is also different from a value of the second DAI in the second DCI.

The value of the first DAI in the first DCI may be for indicating an accumulative count value of a quantity of times for which the terminal device is scheduled up to a PDCCH monitoring occasion and a cell for transmission of the first DCI. The value of the first DAI in the second DCI may be for indicating an accumulative count value of a quantity of times for which the terminal device is scheduled up to a PDCCH monitoring occasion and a cell for transmission of the second DCI. The value of the second DAI in the first DCI may be for indicating a total quantity of times for which the terminal device is scheduled up to the PDCCH monitoring occasion for transmission of the first DCI. The value of the second DAI in the second DCI may be for indicating a total quantity of times for which the terminal device is scheduled up to the PDCCH monitoring occasion for transmission of the second DCI.

It should be noted that the accumulative count value of the quantity of times for which the terminal device is scheduled may also be understood as an accumulative count value of a quantity of times for which the network device schedules data for the terminal device. The total quantity of times for which the terminal device is scheduled may also be understood as a total quantity of times for which the network device schedules data for the terminal device.

However, it should be noted that in Embodiment 3, the value of the first DAI in each of the M pieces of DCI is for indicating an accumulative count value of a quantity of times for which the terminal device is scheduled up to a PDCCH monitoring occasion and a cell for transmission of the DCI, and the value of the second DAI in each DCI is for indicating a total quantity of times for which the terminal device is scheduled up to the PDCCH monitoring occasion for transmission of the DCI.

In another possible implementation, the DAI field may include the first DAI, and the DAI field may further include the second DAI or may not include the second DAI. This is not limited in this application. Accordingly, that the value in the DAI field in the first DCI of the M pieces of DCI is different from the value in the DAI field in the second DCI of the M pieces of DCI may alternatively be as follows. A value of the first DAI in the first DCI is different from a value of the first DAI in the second DCI. The value of the first DAI in the first DCI is for indicating an accumulative count value of a quantity of times for which the terminal device is scheduled up to a PDCCH monitoring occasion and a cell for transmission of the first DCI. The value of the first DAI in the second DCI is for indicating an accumulative count value of a quantity of times for which the terminal device is scheduled up to a PDCCH monitoring occasion and a cell for transmission of the second DCI.

It should be noted that, in this implementation, when the DAI field includes the second DAI, whether values of the second DAIs included in all of the M pieces of DCI are the same is not limited in this application.

Optionally, values in DAI indication fields in any two of the M pieces of DCI are different.

Optionally, the network device may further send third indication information to the terminal device, where the third indication information indicates a value of M and/or a value of N. Alternatively, a value of M and/or a value of N in embodiments of this application may be predefined.

Step S902: The terminal device receives the M pieces of DCI from the network device.

Optionally, after receiving the M pieces of DCI, the terminal device may combine and decode remaining bit fields other than the DAI field in the M pieces of DCI, to improve PDCCH reliability.

Step S903: The terminal device sends feedback information of the first data to the network device, where the feedback information is included in a HARQ-ACK codebook, the feedback information occupies M locations in the HARQ-ACK codebook, and each of the M locations corresponds to one of the M pieces of DCI.

In this embodiment of this application, the HARQ-ACK codebook is a HARQ-ACK codebook corresponding to the M pieces of DCI. In other words, the HARQ-ACK codebook corresponding to the M pieces of DCI is a same HARQ-ACK codebook. A codebook corresponding to a HARQ-ACK corresponding to each of the M pieces of DCI may be determined by using the method according to Embodiment 1.

The M pieces of DCI may be carried in L CORESET groups, to be specific, CORESETs that carry the M pieces of DCI belong to the L CORESET groups, where L is a positive integer.

Based on this, the network device may send first indication information to the terminal device, where the first indication information indicates joint feedback (joint feedback) of feedback information in the L CORESET groups. The joint feedback means that feedback information of downlink data scheduled by DCI that is received on a PDCCH monitoring occasion in the L CORESET groups is jointly sent in a same HARQ-ACK codebook. In other words, the L CORESET groups correspond to a same HARQ-ACK codebook, and the HARQ-ACK codebook is a HARQ-ACK codebook used for the joint feedback.

In this embodiment of this application, the terminal device may generate the feedback information of the first data based on the value in the DAI field in each of the M pieces of DCI, include the feedback information of the first data in one HARQ-ACK codebook, for example, one HARQ-ACK codebook used for the joint feedback, and send the feedback information of the first data to the network device. In this way, uplink resource overheads are effectively reduced.

Because values in DAI indication fields in at least two of the M pieces of DCI are different, the terminal device may send M pieces of feedback information of the first data scheduled by the M pieces of DCI, to improving feedback information reliability. Specifically, the M pieces of feedback information mean that the feedback information of the first data includes M parts or M copies. The M pieces of feedback information occupy M different locations in a same HARQ-ACK codebook, and each piece of feedback information corresponds to one of the M pieces of DCI. A location of each piece of feedback information in the HARQ-ACK codebook is determined based on DAI indication information in DCI corresponding to the piece of feedback information. For example, if DAI indication information in the first DCI of the M pieces of DCI indicates that the network device has scheduled data for the terminal device for n times up to the first DCI, a piece of feedback information corresponding to the first DCI occupies an n^{th} location in the HARQ-ACK codebook.

It should be understood that a quantity of bits included in a piece of feedback information is not limited in this embodiment of this application. Therefore, that a piece of feedback information corresponding to a specific piece of DCI occupies an n^{th} location in the HARQ-ACK codebook does not necessarily indicate that the piece of feedback information corresponding to the DCI occupies the n^{th} bit location in the HARQ-ACK codebook or the piece of feedback information corresponding to the DCI is the n^{th} bit in the HARQ-ACK codebook, because one piece of feedback information may include one or more bits.

Step S904: The network device receives the feedback information of the first data from the terminal device.

For example, in an example shown in FIG. 10, two pieces of DCI 1 are repeated, and values in DAI fields in the two pieces of DCI 1 are different. The terminal device may generate a joint HARQ-ACK codebook based on the first piece of DCI 1, DCI 2, DCI 3, the second piece of DCI 1, and DCI 4. A location of feedback information of data scheduled by the two pieces of DCI 1 in the HARQ-ACK codebook is determined based on a value in a DAI field in the first piece of DCI 1 and a value in a DAI field in the second piece of DCI 1.

If each piece of feedback information occupies one bit, it can be learned from a value in a DAI field in each piece of DCI shown in FIG. 10 that the HARQ-ACK codebook includes five bits in total, and the feedback information of the data scheduled by the two pieces of DCI 1 occupies two bits in the HARQ-ACK codebook. Based on the value in the DAI field in the first piece of DCI 1 (to be specific, a value of a first DAI, namely, a C-DAI), it may be determined that feedback information corresponding to the first piece of DCI 1 occupies the first bit location in the HARQ-ACK codebook. Based on the value in the DAI field in the second piece of DCI 1 (to be specific, a value of a first DAI, namely, a C-DAI), it may be determined that feedback information corresponding to the second piece of DCI 1 occupies the fourth bit location in the HARQ-ACK codebook.

In other words, the terminal device sends 2-bit feedback information of the data scheduled by the two pieces of DCI 1 in total. This is equivalent to sending one piece of corresponding feedback information for each piece of DCI 1. If the feedback information corresponding to one of the two pieces of DCI 1 is an ACK, the network device may consider that the terminal device successfully decodes the data scheduled by the two pieces of DCI 1.

### Embodiment 4

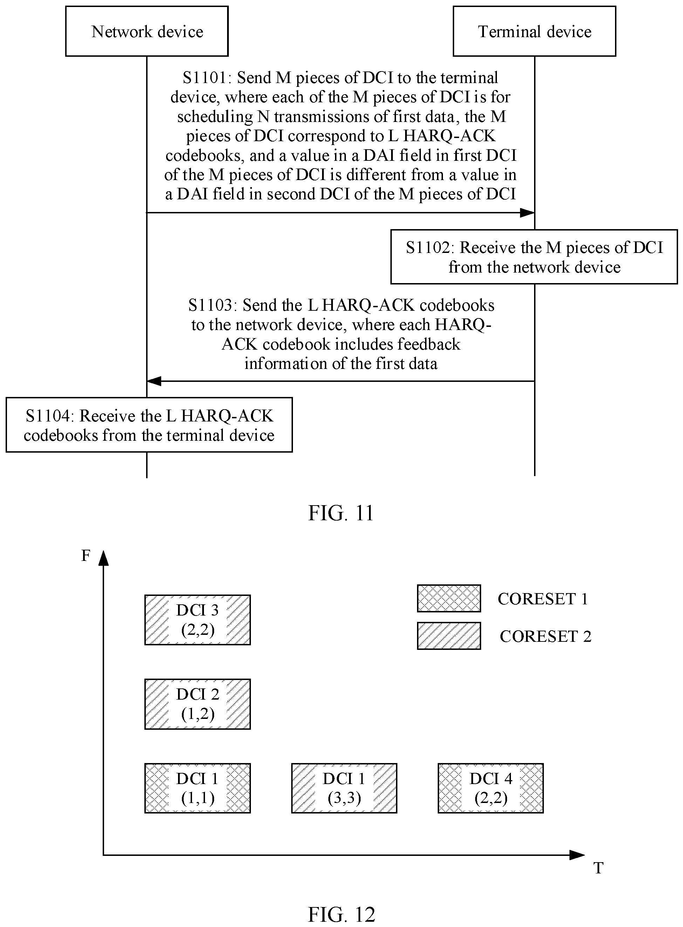

FIG. 11 is a schematic diagram of still another feedback information sending method according to an embodiment of this application. The method specifically includes the following steps.

Step S1101: A network device sends M pieces of DCI to a terminal device, where each of the M pieces of DCI is for scheduling N transmissions of first data, the M pieces of DCI correspond to L HARQ-ACK codebooks, the M pieces of DCI include first DCI and second DCI, a value in a DAI field in the first DCI is different from a value in a DAI field in the second DCI, where M and L are integers greater than or equal to 2, and N is a positive integer.

In step S1101, for a specific implementation of the M pieces of DCI, how each piece of DCI schedules the N transmissions of the first data, and how the M pieces of DCI correspond to the L HARQ-ACK codebooks, refer to the descriptions in step S501 in Embodiment 1. Details are not described herein again.

Similarly, for a specific implementation in which the value in the DAI field in the first DCI of the M pieces of DCI is different from the value in the DAI field in the second DCI of the M pieces of DCI, refer to the descriptions in step S901 in Embodiment 3. Details are not described herein again.

Optionally, values in DAI indication fields in any two of the M pieces of DCI are different.

Optionally, the network device may further send third indication information to the terminal device, where the third indication information indicates a value of M and/or a value of N. Alternatively, a value of M and/or a value of N in embodiments of this application may be predefined.

Step S1102: The terminal device receives the M pieces of DCI from the network device.

Optionally, after receiving the M pieces of DCI, the terminal device may combine and decode remaining bit fields other than the DAI field in the M pieces of DCI, to improve PDCCH reliability.

Step S1103: The terminal device sends the L HARQ-ACK codebooks to the network device, where each HARQ-ACK codebook includes feedback information of the first data.

As described above, the M pieces of DCI correspond to the L HARQ-ACK codebooks. In this embodiment of this application, the terminal device may separately send the feedback information of the first data in each of the L HARQ-ACK codebooks. Therefore, feedback information reliability may be effectively improved. In addition, values in DAI indication fields in at least two of the M pieces of DCI are different. Therefore, a problem of DAI indication ambiguity does not occur in a process of generating the HARQ-ACK codebook by the terminal device. In this way, it is ensured that the network device and the terminal device have a consistent understanding of a quantity of bits of the feedback information, so that large-scale retransmission is avoided.

It should be noted, that each HARQ-ACK codebook includes feedback information of the first data may mean that the terminal device separately sends M pieces of feedback information of the first data in the L HARQ-ACK codebooks, where each piece of feedback information corresponds to one of the M pieces of DCI. In other words, the terminal device may generate one piece of feedback information of the first data for each of the M pieces of DCI, where the M pieces of feedback information of the first data are generated in total. The M pieces of feedback information are distributed in the L HARQ-ACK codebooks based on a correspondence between the M pieces of DCI and the L HARQ-ACK codebooks.

Specifically, a location of one piece of feedback information generated for each of the M pieces of DCI in a HARQ-ACK codebook corresponding to the DCI is determined based on DAI indication information indicated in a DAI field in the DCI. For example, if DAI indication information in the first DCI of the M pieces of DCI indicates that the network device has scheduled data for the terminal device for n times up to the first DCI, a piece of feedback information corresponding to the first DCI occupies an n^{th} location in a first HARQ-ACK codebook, where the first HARQ-ACK codebook is a HARQ-ACK codebook that is of the L HARQ-ACK codebooks and that corresponds to the first DCI.

In this embodiment of this application, the M pieces of DCI may be carried in L CORESET groups, to be specific, CORESETs that carry the M pieces of DCI belong to the L CORESET groups, where L is a positive integer.

Based on this, the network device may send second indication information to the terminal device, where the second indication information indicates separate feedback (separate feedback) of feedback information in the L CORESET groups. The separate feedback means that feedback information of downlink data scheduled by DCI that is received on a PDCCH monitoring occasion in each CORESET group is sent in a HARQ-ACK codebook corresponding to the CORESET group. In other words, each CORESET group corresponds to one of the L HARQ-ACK codebooks.

Step S1104: The network device receives the L HARQ-ACK codebooks from the terminal device.

For example, in an example shown in FIG. 12, two pieces of DCI 1 are repeated, and values in DAI fields in the two pieces of DCI 1 are different. The first piece of DCI 1 and DCI 4 are carried in CORESET 1, and DCI 2, DCI 3, and the second piece of DCI 1 are carried in CORESET 2. It is assumed that CORESET 1 belongs to CORESET group 0, CORESET 2 belongs to CORESET group 1, and the network device indicates that HARQ-ACK codebooks corresponding to the two CORESET groups are separately fed back. In this case, the terminal device may generate one HARQ-ACK codebook based on the first piece of DCI 1 and DCI 4, and generate another HARQ-ACK codebook based on DCI 2, DCI 3, and the second piece of DCI 1. In this way, a location of feedback information of data scheduled by the first piece of DCI 1 in the first HARQ-ACK codebook may be determined based on the value in the DAI field in the first piece of DCI 1. A location of feedback information of data scheduled by the second piece of DCI 1 in the second HARQ-ACK codebook may be determined based on the value in the DAI field in the second piece of DCI 1.

If each piece of feedback information occupies one bit, it can be learned from a value in a DAI field in each piece of DCI shown in FIG. 12 that the first HARQ-ACK codebook includes two bits in total, and the second HARQ-ACK codebook includes three bits in total. Based on the value in the DAI field in the first piece of DCI 1 (to be specific, a value of a first DAI, namely, a C-DAI), it may be determined that the feedback information corresponding to the first piece of DCI 1 occupies the first bit location in the first HARQ-ACK codebook. Based on the value in the DAI field in the second piece of DCI 1 (to be specific, a value of a first DAI, namely, a C-DAI), it may be determined that the feedback information corresponding to the second piece of DCI 1 occupies the third bit location in the second HARQ-ACK codebook. In other words, the terminal device sends 2-bit feedback information of the data scheduled by the two pieces of DCI 1 in total, and the 2-bit feedback information is separately included in the two independently sent HARQ-ACK codebooks.

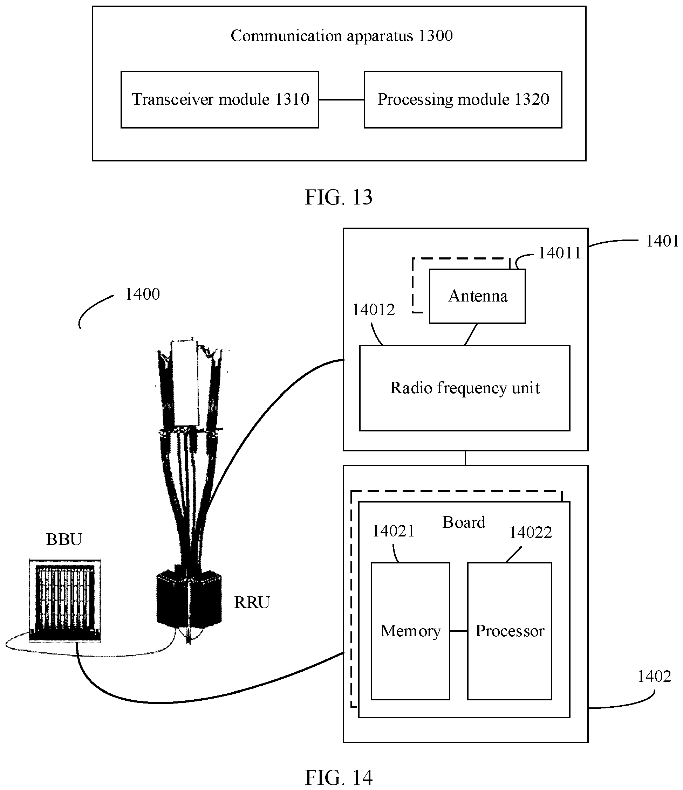

An embodiment of this application further provides a communication apparatus. FIG. 13 is a schematic diagram of a structure of a communication apparatus according to an embodiment of this application. The communication apparatus 1300 includes a transceiver module 1310 and a processing module 1320. The communication apparatus may be configured to implement the function of the network device in any one of the foregoing method embodiments. For example, the communication apparatus may be a network device or a chip included in the network device.

For example, when the communication apparatus is the network device and performs the method embodiment shown in FIG. 5, the transceiver module 1310 is configured to send M pieces of DCI to a terminal device, where the M pieces of DCI are for scheduling N transmissions of first data, the M pieces of DCI correspond to L HARQ-ACK codebooks, where M and L are integers greater than or equal to 2, and N is a positive integer; and the processing module 1320 is configured to receive, through the transceiver module 1310, feedback information of the first data from the terminal device, where the feedback information is included in a first HARQ-ACK codebook, and the first HARQ-ACK codebook is one of the L HARQ-ACK codebooks.

When the communication apparatus is the network device and performs the method embodiment shown in FIG. 7, the transceiver module 1310 is configured to send M pieces of DCI to a terminal device, where each of the M pieces of DCI is for scheduling N transmissions of first data, values in DAI fields included in all of the M pieces of DCI are the same, where M is an integer greater than or equal to 2, and N is a positive integer; and the processing module 1320 is configured to receive, through the transceiver module 1310, feedback information of the first data from the terminal device, where the feedback information is included in a HARQ-ACK codebook, and a location of the feedback information in the HARQ-ACK codebook is determined based on first DCI of the M pieces of DCI.

When the communication apparatus is the network device and performs the method embodiment shown in FIG. 9, the transceiver module 1310 is configured to send M pieces of DCI to a terminal device, where each of the M pieces of DCI is for scheduling N transmissions of first data, the M pieces of DCI include first DCI and second DCI, a value in a DAI field in the first DCI is different from a value in a DAI field in the second DCI, where M is an integer greater than or equal to 2, and N is a positive integer; and the processing module 1320 is configured to receive, through the transceiver module 1310, feedback information of the first data from the terminal device, where the feedback information is included in a HARQ-ACK codebook, the feedback information occupies M locations in the HARQ-ACK codebook, and each of the M locations corresponds to one of the M pieces of DCI.

When the communication apparatus is the network device and performs the method embodiment shown in FIG. 11, the transceiver module 1310 is configured to send M pieces of DCI to a terminal device, where each of the M pieces of DCI is for scheduling N transmissions of first data, the M pieces of DCI correspond to L HARQ-ACK codebooks, the M pieces of DCI include first DCI and second DCI, a value in a DAI field in the first DCI is different from a value in a DAI field in the second DCI, where M and L are integers greater than or equal to 2, and N is a positive integer; and the processing module 1320 is configured to receive, through the transceiver module 1310, the L HARQ-ACK codebooks from the terminal device, where each HARQ-ACK codebook includes feedback information of the first data.

The processing module 1320 in the communication apparatus may be implemented by a processor or a processor-related circuit component, and the transceiver module 1310 may be implemented by a transceiver or a transceiver-related circuit component. Operations and/or functions of the modules in the communication apparatus are separately configured to implement corresponding procedures of the method shown in FIG. 5, FIG. 7, FIG. 9, or FIG. 11. For brevity, details are not described herein again.

FIG. 14 is another schematic diagram of a structure of a communication apparatus according to an embodiment of this application. The communication apparatus may be specifically a network device, for example, a base station, configured to implement the function of the network device in any one of the foregoing method embodiments.

The network device includes one or more radio frequency units, for example, a remote radio unit (remote radio unit, RRU) 1401 and one or more baseband units 1402 (baseband units, BBUs), which may also be referred to as digital units (digital units, DUs). The RRU 1401 may be referred to as a transceiver unit, a transceiver, a transceiver circuit, or the like. The RRU 1401 may include at least one antenna 14011 and a radio frequency unit 14012. The RRU 1401 is mainly configured to receive and send a radio frequency signal and convert the radio frequency signal and a baseband signal. The BBU 1402 is mainly configured to: perform baseband processing, control a base station, and so on. The RRU 1401 and the BBU 1402 may be physically disposed together, or may be physically disposed separately, namely, a distributed base station.

The BBU 1402 is a control center of the base station, may also be referred to as a processing unit, and is mainly configured to implement baseband processing functions such as channel coding, multiplexing, modulation, and spectrum spreading. For example, the BBU (the processing unit) 1402 may be configured to control the base station to perform the operation procedure related to the network device in the foregoing method embodiments.

In an example, the BBU 1402 may include one or more boards, and a plurality of boards may jointly support a radio access network (for example, an LTE network) using a single access standard, or may separately support radio access networks (for example, anLTE network, a 5G network, or another network) using different access standards. The BBU 1402 may further include a memory 14021 and a processor 14022. The memory 14021 is configured to store necessary instructions and data. The processor 14022 is configured to control the base station to perform a necessary action, for example, is configured to control the base station to perform a sending operation in the foregoing method embodiments. The memory 14021 and the processor 14022 may serve one or more boards. In other words, a memory and a processor may be disposed on each board. Alternatively, a plurality of boards may share a same memory and a same processor. In addition, a necessary circuit may further be disposed on each board.

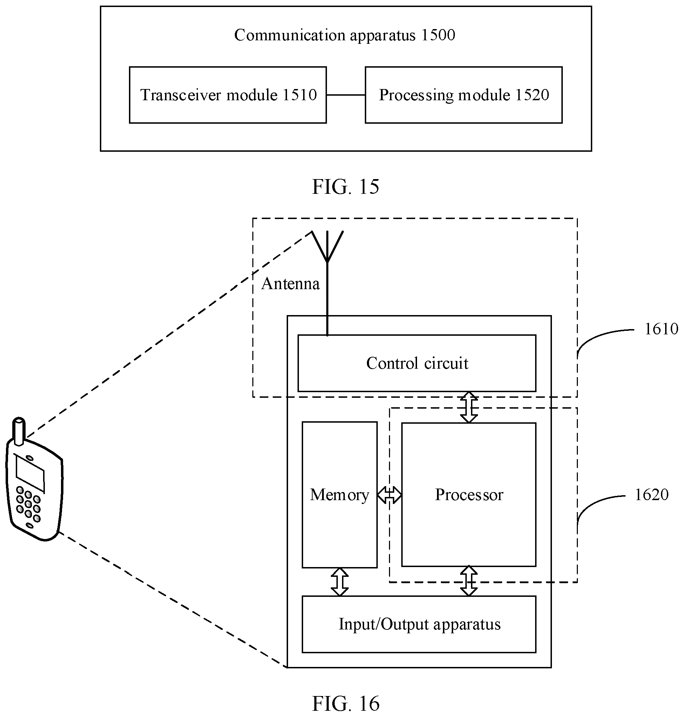

An embodiment of this application further provides another communication apparatus. FIG. 15 is a schematic diagram of a structure of a communication apparatus according to an embodiment of this application. The communication apparatus 1500 includes a transceiver module 1510 and a processing module 1520. The communication apparatus may be configured to implement the function of the terminal device in any one of the foregoing method embodiments. For example, the communication apparatus may be a terminal device, or may be a chip included in the terminal device, or may be an apparatus including the terminal device, for example, various types of vehicles.

For example, when the communication apparatus is the terminal device and performs the method embodiment shown in FIG. 5, the transceiver module 1510 is configured to receive M pieces of DCI from a network device, where each of the M pieces of DCI is for scheduling N transmissions of first data, the M pieces of DCI correspond to L HARQ-ACK codebooks, where M and L are integers greater than or equal to 2, and N is a positive integer; and the processing module 1520 is configured to send feedback information of the first data to the network device through the transceiver module 1510, where the feedback information is included in a first HARQ-ACK codebook, and the first HARQ-ACK codebook is one of the L HARQ-ACK codebooks.

When the communication apparatus is the network device and performs the method embodiment shown in FIG. 7, the transceiver module 1510 is configured to receive M pieces of DCI from a network device, where each of the M pieces of DCI is for scheduling N transmissions of first data, values in DAI fields included in all of the M pieces of DCI are the same, where M is an integer greater than or equal to 2, and N is a positive integer; and the processing module 1520 is configured to send feedback information of the first data to the network device through the transceiver module 1510, where the feedback information is included in a HARQ-ACK codebook, and a location of the feedback information in the HARQ-ACK codebook is determined based on first DCI of the M pieces of DCI.

When the communication apparatus is the network device and performs the method embodiment shown in FIG. 9, the transceiver module 1510 is configured to receive M pieces of DCI from a network device, where each of the M pieces of DCI is for scheduling N transmissions of first data, the M pieces of DCI include first DCI and second DCI, a value in a DAI field in the first DCI is different from a value in a DAI field in the second DCI, where M is an integer greater than or equal to 2, and N is a positive integer; and the processing module 1520 is configured to send feedback information of the first data to the network device through the transceiver module 1510, where the feedback information is included in a HARQ-ACK codebook, the feedback information occupies M locations in the HARQ-ACK codebook, and each of the M locations corresponds to one of the M pieces of DCI.

When the communication apparatus is the network device and performs the method embodiment shown in FIG. 11, the transceiver module 1510 is configured to receive M pieces of DCI from a network device, where each of the M pieces of DCI is for scheduling N transmissions of first data, the M pieces of DCI correspond to L HARQ-ACK codebooks, the M pieces of DCI include first DCI and second DCI, a value in a DAI field in the first DCI is different from a value in a DAI field in the second DCI, where M and L are integers greater than or equal to 2, and N is a positive integer; and the processing module 1520 is configured to send the L HARQ-ACK codebooks to the network device through the transceiver module 1510, where each HARQ-ACK codebook includes feedback information of the first data.

It should be understood that the processing module 1520 in the communication apparatus may be implemented by a processor or a processor-related circuit component, and the transceiver module 1510 may be implemented by a transceiver or a transceiver-related circuit component. Operations and/or functions of the modules in the communication apparatus are separately configured to implement corresponding procedures of the method shown in FIG. 5, FIG. 7, FIG. 9, or FIG. 11. For brevity, details are not described herein again.

FIG. 16 is another schematic diagram of a structure of another communication apparatus according to an embodiment of this application. The communication apparatus may be specifically a terminal device. For ease of understanding and illustration, in FIG. 16, a mobile phone is used as an example of the terminal device. As shown in FIG. 16, the terminal device includes a processor, and may further include a memory. Certainly, the terminal device may further include a radio frequency circuit, an antenna, an input/output apparatus, and the like. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 16. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 16, the terminal device includes a transceiver unit 1610 and a processing unit 1620. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit sometimes may also be referred to as a transceiver circuit. The receiving unit sometimes may also be referred to as a receiver, a receive circuit, or the like. The sending unit sometimes may also be referred to as a transmitter, a transmit circuit, or the like. It should be understood that the transceiver unit 1610 is configured to perform a sending operation and a receiving operation on a terminal device side in the foregoing method embodiments, and the processing unit 1620 is configured to perform an operation other than the sending and receiving operations of the terminal device in the foregoing method embodiments.

An embodiment of this application further provides a chip system, including a processor, where the processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that steps in the foregoing method embodiments may be implemented by using a logic circuit or instructions in a software form in the processor. The steps of the method disclosed with reference to embodiments of this application may be directly performed by a hardware processor, or may be performed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a network device and at least one terminal device.

It should be understood that the processor mentioned in embodiments of this application may be a CPU, or may be another general-purpose processor, a DSP, an ASIC, an FPGA, another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is the general-purpose processor, the DSP, the ASIC, the FPGA, the another programmable logic device, the discrete gate or transistor logic device, or the discrete hardware component, the memory (storage module) is integrated into the processor.

It should be noted that the memory described in this specification aims to include but is not limited to these memories and any memory of another appropriate type.

It should be understood that numbers in various embodiments of this application are merely used for differentiation for ease of description. Sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A feedback information sending method, wherein the method comprises:
sending M pieces of downlink control information DCI to a terminal device, wherein each of the M pieces of DCI is for scheduling N transmissions of first data, the M pieces of DCI correspond to L hybrid automatic repeat request-acknowledgement HARQ-ACK codebooks, wherein M and L are integers greater than or equal to 2, and N is a positive integer; and
receiving feedback information of the first data from the terminal device, wherein the feedback information is comprised in a first HARQ-ACK codebook, and the first HARQ-ACK codebook is one of the L HARQ-ACK codebooks.

2. The method according to claim 1, wherein that the M pieces of DCI correspond to L hybrid automatic repeat request-acknowledgement HARQ-ACK codebooks comprises:
the M pieces of DCI are carried in L control resource set CORESET groups, and each CORESET group corresponds to one HARQ-ACK codebook; and
the first HARQ-ACK codebook is a HARQ-ACK codebook corresponding to a first CORESET group, and the first CORESET group is one of the L CORESET groups.

3. The method according to claim 2, wherein the first CORESET group is a CORESET group that is of the L CORESET groups and that has a smallest group identifier or that is at an earliest time domain location.

4. The method according to claim 2, wherein the first CORESET group is a CORESET group to which a first CORESET belongs, wherein
when transmission configuration indicators TCIs used in the N transmissions of the first data are the same, a TCI of the first CORESET is the same as the TCIs used in the N transmissions of the first data; or
when TCIs used in at least two of the N transmissions of the first data are different, a TCI of the first CORESET is the same as a TCI used in the first transmission or the last transmission of the first data.

5. The method according to claim 1, wherein the first HARQ-ACK codebook is a HARQ-ACK codebook corresponding to first DCI, wherein
the first DCI is DCI that is of the M pieces of DCI and that is at an earliest time domain location;
a time unit that is indicated by the first DCI and that is for sending the feedback information of the first data is an earliest time unit of time units that are indicated by the M pieces of DCI and that are for sending the feedback information of the first data;
a time-frequency resource that is indicated by the first DCI and that is for sending the feedback information of the first data is a largest time-frequency resource of time-frequency resources that are indicated by the M pieces of DCI and that are for sending the feedback information of the first data;
a time-frequency resource that is indicated by the first DCI and that is for sending the feedback information of the first data is a smallest time-frequency resource of time-frequency resources that are indicated by the M pieces of DCI and that are for sending the feedback information of the first data; or
the first DCI is carried in a first CORESET, and the first CORESET is a CORESET that is of CORESETs that carry the M pieces of DCI and that has a smallest CORESET identifier.

6. The method according to any one of claims 1 to 5, wherein a HARQ-ACK codebook other than the first HARQ-ACK codebook in the L HARQ-ACK codebooks does not comprise the feedback information of the first data.

7. A feedback information sending method, wherein the method comprises:
receiving M pieces of downlink control information DCI from a network device, wherein each of the M pieces of DCI is for scheduling N transmissions of first data, the M pieces of DCI correspond to L hybrid automatic repeat request-acknowledgement HARQ-ACK codebooks, wherein M and L are integers greater than or equal to 2, and N is a positive integer; and
sending feedback information of the first data to the network device, wherein the feedback information is comprised in a first HARQ-ACK codebook, and the first HARQ-ACK codebook is one of the L HARQ-ACK codebooks.

8. The method according to claim 7, wherein that the M pieces of DCI correspond to L hybrid automatic repeat request-acknowledgement HARQ-ACK codebooks comprises:
the M pieces of DCI are carried in L control resource set CORESET groups, and each CORESET group corresponds to one HARQ-ACK codebook; and
the first HARQ-ACK codebook is a HARQ-ACK codebook corresponding to a first CORESET group, and the first CORESET group is one of the L CORESET groups.

9. The method according to claim 8, wherein the first CORESET group is a CORESET group that is of the L CORESET groups and that has a smallest group identifier or that is at an earliest time domain location.

10. The method according to claim 8, wherein the first CORESET group is a CORESET group to which a first CORESET belongs, wherein
when transmission configuration indicators TCIs used in the N transmissions of the first data are the same, a TCI of the first CORESET is the same as the TCIs used in the N transmissions of the first data; or
when TCIs used in at least two of the N transmissions of the first data are different, a TCI of the first CORESET is the same as a TCI used in the first transmission or the last transmission of the first data.

11. The method according to claim 7, wherein the first HARQ-ACK codebook is a HARQ-ACK codebook corresponding to first DCI, wherein
the first DCI is DCI that is of the M pieces of DCI and that is at an earliest time domain location;
a time unit that is indicated by the first DCI and that is for sending the feedback information of the first data is an earliest time unit of time units that are indicated by the M pieces of DCI and that are for sending the feedback information of the first data;
a time-frequency resource that is indicated by the first DCI and that is for sending the feedback information of the first data is a largest time-frequency resource of time-frequency resources that are indicated by the M pieces of DCI and that are for sending the feedback information of the first data;
a time-frequency resource that is indicated by the first DCI and that is for sending the feedback information of the first data is a smallest time-frequency resource of time-frequency resources that are indicated by the M pieces of DCI and that are for sending the feedback information of the first data; or
the first DCI is carried in a first CORESET, and the first CORESET is a CORESET that is of CORESETs that carry the M pieces of DCI and that has a smallest CORESET identifier.

12. The method according to any one of claims 7 to 11, wherein a HARQ-ACK codebook other than the first HARQ-ACK codebook in the L HARQ-ACK codebooks does not comprise the feedback information of the first data.

13. A feedback information sending method, wherein the method comprises:
sending M pieces of DCI to a terminal device, wherein each of the M pieces of DCI is for scheduling N transmissions of first data, values in downlink assignment index DAI fields comprised in all of the M pieces of DCI are the same, wherein M is an integer greater than or equal to 2, and N is a positive integer; and
receiving feedback information of the first data from the terminal device, wherein the feedback information is comprised in a hybrid automatic repeat request-acknowledgement HARQ-ACK codebook, and a location of the feedback information in the HARQ-ACK codebook is determined based on first DCI of the M pieces of DCI.

14. The method according to claim 13, wherein the M pieces of DCI are carried in L CORESET groups, and L is an integer greater than or equal to 2; and
the method further comprises:
sending first indication information to the terminal device, wherein the first indication information indicates joint feedback of feedback information in the L CORESET groups.

15. A feedback information sending method, wherein the method comprises:
receiving M pieces of downlink control information DCI from a network device, wherein each of the M pieces of DCI is for scheduling N transmissions of first data, values in downlink assignment index DAI fields comprised in all of the M pieces of DCI are the same, wherein M is an integer greater than or equal to 2, and N is a positive integer; and
sending feedback information of the first data to the network device, wherein the feedback information is comprised in a hybrid automatic repeat request-acknowledgement HARQ-ACK codebook, and a location of the feedback information in the HARQ-ACK codebook is determined based on first DCI of the M pieces of DCI.

16. The method according to claim 15, wherein the M pieces of DCI are carried in L CORESET groups, and L is an integer greater than or equal to 2; and
the method further comprises:
receiving first indication information from the network device, wherein the first indication information indicates joint feedback of feedback information in the L CORESET groups.

17. The method according to any one of claims 13 to 16, wherein the DAI field comprises a first DAI and a second DAI; and
that values in DAI fields comprised in all of the M pieces of DCI are the same comprises:
values of the first DAIs comprised in all of the M pieces of DCI are the same, and values of the second DAIs comprised in all of the M pieces of DCI are the same, wherein
the value of the first DAI is for indicating an accumulative count value of a quantity of times for which the terminal device is scheduled up to a physical downlink control channel PDCCH monitoring occasion and a cell for transmission of the first DCI, and the value of the second DAI is for indicating a total quantity of times for which the terminal device is scheduled up to the PDCCH monitoring occasion for transmission of the first DCI.

18. The method according to any one of claims 13 to 16, wherein the DAI field comprises a first DAI; and
that values in DAI fields comprised in all of the M pieces of DCI are the same comprises:
values of the first DAIs comprised in all of the M pieces of DCI are the same, wherein
the value of the first DAI is for indicating an accumulative count value of a quantity of times for which the terminal device is scheduled up to a PDCCH monitoring occasion and a cell for transmission of the first DCI.

19. The method according to any one of claims 13 to 18, wherein the first DCI is DCI that is of the M pieces of DCI and that is at an earliest time domain location;
a time unit that is indicated by the first DCI and that is for sending the feedback information of the first data is an earliest time unit of time units that are indicated by the M pieces of DCI and that are for sending the feedback information of the first data;
a time-frequency resource that is indicated by the first DCI and that is for sending the feedback information of the first data is a largest time-frequency resource of time-frequency resources that are indicated by the M pieces of DCI and that are for sending the feedback information of the first data;
a time-frequency resource that is indicated by the first DCI and that is for sending the feedback information of the first data is a smallest time-frequency resource of time-frequency resources that are indicated by the M pieces of DCI and that are for sending the feedback information of the first data; or
the first DCI is carried in a first control resource set CORESET, and the first CORESET is a CORESET that is of CORESETs that carry the M pieces of DCI and that has a smallest CORESET identifier.

20. The method according to any one of claims 13 to 18, wherein a CORESET group to which the CORESET carrying the first DCI belongs is a CORESET group that is of the CORESET groups carrying the M pieces of DCI and that has a smallest group identifier or that is at an earliest time domain location.

21. A feedback information sending method, wherein the method comprises:
sending M pieces of DCI to a terminal device, wherein each of the M pieces of DCI is for scheduling N transmissions of first data, the M pieces of DCI comprise first DCI and second DCI, a value in a downlink assignment index DAI field in the first DCI is different from a value in a DAI field in the second DCI, wherein M is an integer greater than or equal to 2, and N is a positive integer; and
receiving feedback information of the first data from the terminal device, wherein the feedback information is comprised in a HARQ-ACK codebook, the feedback information occupies M locations in the HARQ-ACK codebook, and each of the M locations corresponds to one of the M pieces of DCI.

22. The method according to claim 21, wherein the M pieces of DCI are carried in L control resource set CORESET groups, and L is an integer greater than or equal to 2; and
the method further comprises:
sending first indication information to the terminal device, wherein the first indication information indicates joint feedback of feedback information in the L CORESET groups.

23. A feedback information sending method, wherein the method comprises:
receiving M pieces of downlink control information DCI from a network device, wherein each of the M pieces of DCI is for scheduling N transmissions of first data, the M pieces of DCI comprise first DCI and second DCI, a value in a downlink assignment index DAI field in the first DCI is different from a value in a DAI field in the second DCI, wherein M is an integer greater than or equal to 2, and N is a positive integer; and
sending feedback information of the first data to the network device, wherein the feedback information is comprised in a hybrid automatic repeat request-acknowledgement HARQ-ACK codebook, the feedback information occupies M locations in the HARQ-ACK codebook, and each of the M locations corresponds to one of the M pieces of DCI.

24. The method according to claim 23, wherein the M pieces of DCI are carried in L control resource set CORESET groups, and L is an integer greater than or equal to 2; and
the method further comprises:
receiving first indication information from the network device, wherein the first indication information indicates joint feedback of feedback information in the L CORESET groups.

25. The method according to any one of claims 21 to 24, wherein the DAI field comprises a first DAI and a second DAI; and
that a value in a DAI field in the first DCI is different from a value in a DAI field in the second DCI comprises:
a value of the first DAI in the first DCI is different from a value of the first DAI in the second DCI, and a value of the second DAI in the first DCI is different from a value of the second DAI in the second DCI, wherein
the value of the first DAI in the first DCI is for indicating an accumulative count value of a quantity of times for which a terminal device is scheduled up to a physical downlink control channel PDCCH monitoring occasion and a cell for transmission of the first DCI;
the value of the first DAI in the second DCI is for indicating an accumulative count value of a quantity of times for which the terminal device is scheduled up to a PDCCH monitoring occasion and a cell for transmission of the second DCI;
the value of the second DAI in the first DCI is for indicating a total quantity of times for which the terminal device is scheduled up to the PDCCH monitoring occasion for transmission of the first DCI; and
the value of the second DAI in the second DCI is for indicating a total quantity of times for which the terminal device is scheduled up to the PDCCH monitoring occasion for transmission of the second DCI.

26. The method according to any one of claims 21 to 24, wherein the DAI field comprises a first DAI; and
that a value in a DAI field in the first DCI is different from a value in a DAI field in the second DCI comprises:
a value of the first DAI in the first DCI is different from a value of the first DAI in the second DCI; wherein
the value of the first DAI in the first DCI is for indicating an accumulative count value of a quantity of times for which the terminal device is scheduled up to a PDCCH monitoring occasion and a cell for transmission of the first DCI; and
the value of the first DAI in the second DCI is for indicating an accumulative count value of a quantity of times for which the terminal device is scheduled up to a PDCCH monitoring occasion and a cell for transmission of the second DCI.

27. A feedback information sending method, wherein the method comprises:
sending M pieces of downlink control information DCI to a terminal device, wherein each of the M pieces of DCI is for scheduling N transmissions of first data, the M pieces of DCI correspond to L hybrid automatic repeat request-acknowledgement HARQ-ACK codebooks, the M pieces of DCI comprise first DCI and second DCI, a value in a downlink assignment index DAI field in the first DCI is different from a value in a DAI field in the second DCI, wherein M and L are integers greater than or equal to 2, and N is a positive integer; and
receiving the L HARQ-ACK codebooks from the terminal device, wherein each HARQ-ACK codebook comprises feedback information of the first data.

28. The method according to claim 27, wherein the method further comprises:
sending second indication information to the terminal device, wherein the second indication information indicates separate feedback of feedback information corresponding to L CORESET groups.

29. A feedback information sending method, wherein the method comprises:
receiving M pieces of downlink control information DCI from a network device, wherein each of the M pieces of DCI is for scheduling N transmissions of first data, the M pieces of DCI correspond to L hybrid automatic repeat request-acknowledgement HARQ-ACK codebooks, the M pieces of DCI comprise first DCI and second DCI, a value in a downlink assignment index DAI field in the first DCI is different from a value in a DAI field in the second DCI, wherein M and L are integers greater than or equal to 2, and N is a positive integer; and
sending the L HARQ-ACK codebooks to the network device, wherein each HARQ-ACK codebook comprises feedback information of the first data.

30. The method according to claim 29, wherein the method further comprises:
receiving second indication information from the network device, wherein the second indication information indicates separate feedback of feedback information corresponding to L CORESET groups.

31. The method according to any one of claims 27 to 30, wherein that the M pieces of DCI correspond to L HARQ-ACK codebooks comprises:
the M pieces of DCI are carried in the L control resource set CORESET groups, and each CORESET group corresponds to one HARQ-ACK codebook.

32. The method according to any one of claims 27 to 31, wherein the DAI field comprises a first DAI and a second DAI; and
that a value in a DAI field in the first DCI is different from a value in a DAI field in the second DCI comprises:
a value of the first DAI in the first DCI is different from a value of the first DAI in the second DCI, and a value of the second DAI in the first DCI is different from a value of the second DAI in the second DCI, wherein
the value of the first DAI in the first DCI is for indicating an accumulative count value of a quantity of times for which the terminal device is scheduled up to a physical downlink control channel PDCCH monitoring occasion and a cell for transmission of the first DCI;
the value of the first DAI in the second DCI is for indicating an accumulative count value of a quantity of times for which the terminal device is scheduled up to a PDCCH monitoring occasion and a cell for transmission of the second DCI;
the value of the second DAI in the first DCI is for indicating a total quantity of times for which the terminal device is scheduled up to the PDCCH monitoring occasion for transmission of the first DCI; and
the value of the second DAI in the second DCI is for indicating a total quantity of times for which the terminal device is scheduled up to the PDCCH monitoring occasion for transmission of the second DCI.

33. The method according to any one of claims 27 to 31, wherein the DAI field comprises a first DAI; and
that a value in a DAI field in the first DCI is different from a value in a DAI field in the second DCI comprises:
a value of the first DAI in the first DCI is different from a value of the first DAI in the second DCI; wherein
the value of the first DAI in the first DCI is for indicating an accumulative count value of a quantity of times for which the terminal device is scheduled up to a PDCCH monitoring occasion and a cell for transmission of the first DCI; and
the value of the first DAI in the second DCI is for indicating an accumulative count value of a quantity of times for which the terminal device is scheduled up to a PDCCH monitoring occasion and a cell for transmission of the second DCI.

34. A communication apparatus, wherein the apparatus comprises a unit configured to perform the method according to any one of claims 1 to 33.

35. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 33.

36. A computer-readable storage medium, configured to store instructions, wherein when the instructions are executed, the method according to any one of claims 1 to 33 is implemented.

37. A communication system, comprising a first communication apparatus and a second communication apparatus, wherein
the first communication apparatus is configured to perform the method according to any one of claims 1 to 6, 13 and 14, 17 to 22, 25 to 28, and 31 to 33; and the second communication apparatus is configured to perform the method according to any one of claims 7 to 12, 15 to 20, 23 to 26, and 29 to 33.
